**Europäisches Patentamt**

**European Patent Office**

**Office européen des brevets**

(19)

(11) Veröffentlichungsnummer : **0 034 381**
**B1**

(12) **EUROPÄISCHE PATENTSCHRIFT**

(45) Veröffentlichungstag der Patentschrift :
09.09.87

(21) Anmeldenummer : 81200098.2

(22) Anmeldetag : 28.01.81

(51) Int. Cl.⁴ : **G 11 B 5/52**

(54) Bandaufzeichnungs- und/oder Wiedergabegerät mit rotierendem Magnetkopf.

(30) Priorität : 13.02.80 AT 775/80
14.04.80 AT 2009/80

(43) Veröffentlichungstag der Anmeldung :
26.08.81 Patentblatt 81/34

(45) Bekanntmachung des Hinweises auf die Patenterteilung : 09.09.87 Patentblatt 87/37

(84) Benannte Vertragsstaaten :
BE CH DE FR GB IT LI NL SE

(56) Entgegenhaltungen :
EP-A- 0 024 765
DE-A- 2 728 696
GB-A- 2 045 510
GB-A- 2 049 878
PATENTS ABSTRACTS OF JAPAN, Band 2, Nr. 149,
13. Dezember 1978, Seite 9536 E 78
PATENTS ABSTRACTS OF JAPAN, Band 4, Nr. 5, 16.
Januar 1980, Seite 143 E 165
IBM TECHNICAL DISCLOSURE BULLETIN, Band 17,
Nr 9, Februar 1975, Armonk, N.Y. USA, D.W.
ALBRECHT et al. "Interchangeable head assembly
for a rotating head recorder", Seiten 2568-2569
PATENTS ABSTRACTS OF JAPAN, Band 2, Nr. 20, 9.
Februar 1978, Seite 11333 E 77
PATENTS ABSTRACTS OF JAPAN, Band 4, Nr. 122,
29. August 1980, Seite 110 P 25

(73) Patentinhaber : N.V. Philips' Gloeilampenfabrieken
Groenewoudseweg 1
NL-5621 BA Eindhoven (NL)

(72) Erfinder : Hanecka, Lubomir
P/A Intern. Octrooibureau B.V. Prof. Holstlaan 6
N-5656 AA Eindhoven (NL)
Erfinder : Hütter, Heinrich
P/A Intern. Octrooibureau B.V. Prof. Holstlaan 6
N-5656 AA Eindhoven (NL)

(74) Vertreter : Van Weele, Paul Johannes Frits et al
INTERNATIONAAL OCTROOIBUREAU B.V. Prof. Holstlaan 6
NL-5656 AA Eindhoven (NL)

## Beschreibung

Die Erfindung bezieht sich auf ein Aufzeichnungs und/oder Wiedergabegerät für einen magnetisierbaren, bandförmigen Aufzeichnungsträger, das mindestens einen rotierend antreibbaren, den Aufzeichnungsträger entlang Informationsspuren abtastenden Magnetkopf aufweist, der auf einem Träger angebracht ist, der eine Nabe aufweist, mit welcher der Träger mit einer rotierend antreibbaren Welle kraftschlüssig verbunden ist, wobei die Nabe mindestens einen seitlich auskragenden, hohlzylindrischen, koaxial zur Welle verlaufenden, hülsenförmigen Ansatz aufweist, an dem eine auf denselben aufgesetzte lösbare Klemmeinrichtung angreift, die zur kraftschlüssigen Verbindung des Trägers mit der Welle den hülsenförmigen Ansatz des Trägers an der Welle klemmend festhält. Ein derartiges Gerät ist aus der AT-PS-345 577 bekannt.

Bei dem bekannten Gerät ist die Klemmeinrichtung durch eine im wesentlichen ringförmige Klemmschelle gebildet, die den hülsenförmigen Ansatz praktisch längs dessen gesamten Umfanges umschliesst, um den hülsenförmigen Ansatz an der Welle klemmend festzuhalten. Hierbei muss die Klemmschelle beim Festklemmen den hülsenförmigen Ansatz um dessen gesamten Umfang gleichmässig verengen und gegen die Welle drücken, wofür aber relativ grosse Betätigungskräfte erforderlich sind. Das Aufbringen von solch grossen Betätigungskräften kann aber beim Festklemmen der Klemmeinrichtung zu einer Verbiegung der Welle führen, die nach erfolgtem Festklemmen bestehen bleibt und damit eine mit einem Schlag behaftete Rotation des Trägers beim Antreiben der Welle zur Folge hat. Ein solcher Schlag des beispielsweise zwei Magnetköpfe tragenden Trägers wirkt sich aber störend bei einem Aufzeichnungs- und/oder Wiedergabevorgang von Informationen auf den bzw. von dem Aufzeichnungsträger aus.

Ferner können grosse Betätigungskräfte beim Festklemmen einer Klemmeinrichtung auch zu einer Beschädigung der Lager der Welle führen. Diese Lager sind meist als Kugellager ausgebildet, wobei sich dann beim Aufbringen von grossen Betätigungskräften die Kugeln in ihre Laufbahnen eindrücken können, was einen gestörten, ungleichmässigen Lauf der Welle und damit des die Magnetköpfe tragenden Trägers zur Folge hat, der sich ebenfalls störend bei einem Aufzeichnungs- und/oder Wiedergabevorgang von Informationen auswirkt.

Die Erfindung hat sich zur Aufgabe gestellt, bei einem Gerät der eingangs angeführten Art, eine Klemmeinrichtung zum Festklemmen eines Trägers für mindestens einen Magnetkopf an einer Welle zu schaffen, zu deren Betätigung nur kleine Betätigungskräfte aufzubringen sind und die ein sicheres und exaktes Festklemmen des Trägers an der Welle gewährleistet, ohne dass durch den Klemmvorgang selbst störende Einflüsse auf die gesamte Anordnung entstehen. Ferner soll die Betätigung der Klemmeinrichtung mit einer einfachen Handhabung durchführbar sein, damit der Träger sowohl einfach montiert als auch wieder demontiert werden kann. Dies ist beispielsweise im Hinblick auf eine Mechanisierung des Festklemmvorganges oder überhaupt bei der Montage oder beim Auswechseln des Trägers wichtig. Ein solches Auswechseln des Trägers kann nämlich öfters erforderlich sein, da die auf ihm angeordneten Magnetköpfe meist nur eine beschränkte Lebensdauer haben. Auch muss eine solche Klemmeinrichtung gewährleisten, dass jeder mit ihr an der Welle befestigte Träger exakt die gleiche Position einnimmt, damit stets gleiche Verhältnisse bei den Aufzeichnungs- und/oder Wiedergabevorgängen vorliegen.

Die Erfindung ist hierzu dadurch gekennzeichnet, dass die Klemmeinrichtung eine erste Klemmbacke, eine zweite Klemmbacke und eine dritte Klemmbacke aufweist, die untereinander kraftschlüssig in Verbindung stehen und die je eine an dem hülsenförmigen Ansatz in einer Tangentialebene anliegende Klemmfläche aufweisen und die mit ihren Klemmflächen in Umfangsrichtung der Welle in einem gegenseitigen Winkelabstand von je 120° und im wesentlichen in einem gleichen senkrecht zur Achse der Welle verlaufenden Niveau an dem hülsenförmigen Ansatz angreifen, und dass zur Bildung der kraftschlüssigen Verbindung des Trägers mit der Welle mindestens eine der drei Klemmbacken mit ihrer Klemmfläche im wesentlichen senkrecht zur Achse der Welle mit einer Einstellvorrichtung verstellbar ist, wobei beim Verstellen dieser Klemmbacke zum Festklemmen des hülsenförmigen Ansatzes an der Welle jede der drei Klemmbacken eine senkrecht zu der Tangentialebene, in der jeweils die Klemmfläche der Klemmbacke an dem hülsenförmigen Ansatz anliegt, verlaufende Klemmkraft auf den hülsenförmigen Ansatz ausübt.

Auf diese Weise ist erreicht, dass die Klemmeinrichtung den Träger stets exakt und sicher auf der Welle klemmend festhält. Hierbei greift die Klemmeinrichtung in vollkommen statisch bestimmter Weise zentrisch symmetrisch an dem hülsenförmigen Ansatz an, da sie nicht längs des gesamten Umfanges desselben wirksam ist, sondern nur an drei gleichmässig um je 120° zueinander versetzten Angriffsstellen, die im wesentlichen auf einem gleichen senkrecht zur Achse der Welle verlaufenden Niveau liegen. Dabei sind die von den drei Klemmbacken an den drei Angriffsstellen ausgeübten Klemmkräfte genau gleich gross und exakt zentrisch zu dem hülsenförmigen Ansatz bzw. zu der Welle ausgerichtet. Durch dieses exakt symmetrische Angreifen der Klemmeinrichtung an dem hülsenförmigen Ansatz ist erreicht, dass durch die von der Klemmeinrichtung ausgeübte Klemmwirkung an sich keine Verbiegung der Welle erfolgen kann. Auf Grund der Tatsache, dass die Klemmeinrichtung nur an drei um je 120° zueinander versetzten Angriffsstellen an dem hülsenförmigen Ansatz angreift, wird derselbe beim Festklemmen nur an drei Bereichen gegen die Welle gedrückt, wofür nur relative kleine Betätigungskräfte erforderlich sind. Hierdurch ist also erreicht, dass eine Verbiegung der Welle und eine Beschädigung der Lager für die Welle beim Aufbringen der Betätigungskräfte ausgeschlossen ist. Somit sind aber alle bei einer Verbiegung der Welle bzw. einer Beschädigung der Lager für die Welle auftretenden, bereits eingangs angeführten Mängel und Störungen unterbunden, so dass stets ein ordnungsgemässer und zufriedenstellender Aufzeichnungs- und/oder Wiedergabevorgang von Informationen gewährleistet und damit ein qualitativ sehr hochwertiges Aufzeichnungs- und/oder Wiedergabegerät erhalten ist.

Das Festklemmen des hülsenförmigen Ansatzes an der Welle erfolgt bei dem erfindungsgemässen Gerät durch Verstellen der Klemmbacken, auf welche die zum Festklemmen erforderliche Betätigungskraft ausgeübt bzw. übertragen werden muss. Durch die Ausbildung der Klemmbacken, wofür selbstverständlich verschiedene Möglichkeiten offen sind, kann leicht den Erfordernissen und konstruktiven Gegebenheiten bezüglich einer einfachen Handhabung zur Betätigung der Klemmeinrichtung entsprochen werden. Somit ist auch eine einfache Bedienung der Klemmeinrichtung auf einfache Weise erreichbar, wodurch eine einfache Montage und Demontage des Trägers zum Auswechseln desselben möglich ist, wenn beispielsweise der auf dem Träger angebrachte Magnetkopf zu stark abgenützt oder defekt ist.

Als sehr vorteilhaft hat sich erwiesen, wenn die erste Klemmbacke und die zweite Klemmbacke über ein erstes Gelenk miteinander verbunden sind, wenn die Klemmeinrichtung einen ersten Verbindungsbalken, der über ein zweites Gelenk mit der ersten Klemmbacke verbunden ist, und einen zweiten Verbindungsbalken aufweist, der über ein drittes Gelenk mit der zweiten Klemmbacke verbunden ist, wobei der erste und der zweite Verbindungsbalken über mindestens ein weiteres Gelenk miteinander verbunden sind und wobei die Gelenkachsen aller Gelenke im wesentlichen parallel zur Achse der Welle verlaufen, die Gelenkachse des ersten Gelenks in der durch die Achse der Welle hindurchgehenden Symmetrieebene zu den beiden Tangentialebenen, in denen die Klemmflächen der ersten und der zweiten Klemmbacke an dem hülsenförmigen Ansatz liegen, liegt und die Gelenkachse des zweiten Gelenks und die Gelenkachse des dritten Gelenks in Bezug auf die Symmetrieebene zu den beiden Tangentialebenen spiegelbildlich zueinander angeordnet sind und eine durch die Gelenkachsen des zweiten und des weiteren Gelenks am ersten Verbindungsbalken hindurchgehende erste Verbindungsebene und eine durch die Gelenkachse des dritten und des weiteren Gelenks am zweiten Verbindungsbalken hindurchgehende zweite Verbindungsebene sich in der Symmetrieebene zu den beiden Tangentialebenen schneiden, und wenn die dritte Klemmbacke sich an einem im Bereich des weiteren Gelenks vorgesehenen Gegenlager abstützt und zur Bildung der kraftschlüssigen Verbindung des Trägers mit der Welle mit ihrer Klemmfläche im wesentlichen senkrecht zur Achse der Welle mit der Einstellvorrichtung gegenüber dem Gegenlager verstellbar ist, wobei die von der ersten Klemmbacke ausgeübte Klemmkraft eine erste Kraftkomponente, die senkrecht zur Symmetrieebene zu den beiden Tangentialebenen verlaufend durch die Gelenkachse des ersten Gelenks hindurchgeht, und eine zweite Kraftkomponente aufweist, die in der ersten Verbindungsebene liegt, und die von der zweiten Klemmbacke ausgeübte Klemmkraft eine erste Kraftkomponente, die senkrecht zur Symmetrieebene zu den beiden Tangentialebenen verlaufend durch die Gelenkachse des ersten Gelenks hindurchgeht, und eine zweite Kraftkomponente aufweist, die in der zweiten Verbindungsebene liegt, und die von der dritten Klemmbacke ausgeübte Klemmkraft in der Symmetrieebene zu den beiden Tangentialebenen liegend durch die Gelenkachse des ersten Gelenks hindurchgeht. Eine solche Klemmeinrichtung ist durch einfaches Aufstecken in Richtung der Achse der Welle auf den hülsenförmigen Ansatz aufsetzbar. Zum Festklemmen des hülsenförmigen Ansatzes an der Welle muss dabei lediglich eine einzige Klemmbacke verstellt werden, was daher sehr einfach durchführbar ist. Durch die gelenkige Verbindung der drei Klemmbacken untereinander ist dabei weiters erreicht, dass sich die drei Klemmbacken beim Festklemmen des hülsenförmigen Ansatzes an der Welle in ihrer gegenseitigen Lage so einstellen können, dass trotz der Verstellung von nur einer Klemmbacke mit der Einstellvorrichtung stets alle drei Klemmbacken mit absolut gleich grossen Klemmkräften, die ausserdem exakt zentrisch zur Welle ausgerichtet sind, auf den Ansatz einwirken. Damit ist eine besonders gleichmässige Kräfteverteilung auf den hülsenförmigen Ansatz bzw. auf die Welle erzielt, wodurch absolut sicher jegliche Verbiegung der Welle vermieden ist. Durch die einfache Betätigung ist dabei ausserdem gewährleistet, dass sich sowohl das Montieren als auch das Demontieren, also das Auswechseln des Trägers stets sehr einfach und reproduzierbar durchführen lässt.

Als vorteilhaft hat sich weiters erwiesen, wenn das Gegenlager für die dritte Klemmbacke durch einen dritten Verbindungsbalken gebildet ist, der zwischen den ersten Verbindungsbalken und den zweiten Verbindungsbalken eingefügt ist und der mit dem ersten Verbindungsbalken über ein erstes weiteres Gelenk und mit dem zweiten Verbindungsbalken über ein zweites weiteres Gelenk verbunden ist. Auf diese Weise ist eine besonders betriebssichere und stabile Ausführungsform geschaffen, die sich weiters durch eine einfache und kompakte Ausbildung auszeichnet.

Hierbei hat es sich als vorteilhaft erwiesen, wenn die dritte Klemmbacke der Klemmeinrichtung durch einen federnden, längs einer senkrecht zur Symmetrieebene zu den beiden Tangentialebenen verlaufenden Biegekante im wesentlichen V-förmig abgebogenen Spreizwinkel gebildet ist, der einen ersten Spreizschenkel und einen zweiten Spreizschenkel aufweist, wobei das freie Ende des ersten Spreizschenkels die Klemmfläche der dritten Klemmbacke bildet und das freie Ende des zweiten Spreizschenkels sich an dem dritten Verbindungsbalken abstützt, und wenn an dem Spreizwinkel im wesentlichen im Bereich der Biegekante desselben eine Stellschraube angreift, durch deren Betätigung die beiden Spreizschenkel des Spreizwinkels zum Festklemmen des hülsenförmigen Ansatzes an der Welle auseinanderspreizbar sind. Hierdurch ist auf besonders einfache Weise erreicht, dass mit einer sehr kleinen Betätigungskraft das Auslangen gefunden wird, da mit dem Spreizwinkel ein grosses Kräfteübersetzungsverhältnis zwischen den Klemmkräften und der hierfür aufzubringenden Betätigungskraft erzielbar ist. Durch die federnde Ausbildung des Spreizschenkels wird hierbei weiters der Vorteil erhalten, dass bei einer Massenproduktion die durch die Spreizschenkel der verschiedenen Klemmeinrichtungen bewirkten Klemmkräfte praktisch unabhängig von Toleranzverhältnissen und Einstellgenauigkeiten sind, da unterschiedliche Toleranzen und geringfügig voneinander abweichende Einstellungen auf Grund der federnden Eigenschaften ausgeglichen werden, so dass in jedem Fall praktisch gleich grosse Klemmkräfte erhalten werden. Weiters ist in diesem Fall das Festklemmen, das durch Festziehen der Stellschraube erfolgt, auf einfache und unbehinderte Weise durchführbar, so dass der Träger leicht und rasch ausgewechselt werden kann und stets wieder die gewünschte Position einnimmt.

Der Spreizwinkel kann beispielsweise aus einem einfachen abgewinkelten federnden Blechteil bestehen. Als besonders vorteilhaft hat sich jedoch erwiesen, wenn der als dritte Klemmbacke vorgesehene Spreizwinkel durch mindestens zwei Lagen von aneinanderliegenden, V-förmig abgebogenen Blattfedern gebildet ist. Hierdurch ist erreicht, dass die Betätigungskraft zum Auseinanderspreizen des Spreizwinkels besonders klein wird, da ein aus mehreren Lagen von bestehender Spreizwinkel mit einer aus der Summe der Dicke der einzelnen Lagen gebildeten Gesamtdicke leichter auseinanderspreizbar ist als ein die gleiche Gesamtdicke aufweisender, nur aus einer Lage bestehender Spreizwinkel, wobei jedoch in einer im wesentlichen senkrecht zur Achse der Welle verlaufenden Richtung praktisch dieselbe Belastbarkeit des aus mehreren Lagen bestehenden Spreizwinkels im Hinblick auf das Festklemmen des hülsenförmigen Ansatzes an der Welle erhalten bleibt.

Ebenfalls als vorteilhaft hat sich erwiesen, wenn die dritte Klemmbacke der Klemmeinrichtung durch einen L-förmig abgewinkelten Bügel gebildet ist, der um eine senkrecht zur Symmetrieebene zu den beiden Tangentialebenen verlaufende Schwenkachse gegenüber dem dritten Verbindungsbalken schwenkbar an demselben gelagert ist und der einen im wesentlichen parallel zur Achse der Welle verlaufenden ersten Schenkel und einen im wesentlichen senkrecht zur Achse der Welle verlaufenden zweiten Schenkel aufweist, wobei die Klemmfläche der dritten Klemmbacke an dem ersten Schenkel ausgebildet ist, und wenn an dem zweiten Schenkel eine Stellschraube angreift, durch deren Betätigung der Bügel gegenüber dem dritten Verbindungsbalken zum Festklemmen des hülsenförmigen Ansatzes an der Welle verschwenkbar ist. Hierdurch ist eine besonders einfache und robuste Klemmeinrichtung geschaffen, zu deren auf einfach Weise durchzuführenden Betätigung auch nur kleine Betätigungskräfte notwendig sind, wobei das Verhältnis zwischen Betätigungskraft und den hierdurch bewirkten Klemmkräften einfach durch entsprechende Wahl der Länge der Schenkel des Bügels festgelegt werden kann.

Als besonders vorteilhaft hat sich erwiesen, wenn die Nabe des Trägers mit zwei entgegengesetzt seitlich auskragenden, hohlzylindrischen, koaxial zur Welle verlaufenden, hülsenförmigen Ansätzen versehen ist, an denen je eine Klemmeinrichtung angreift, wobei die beiden dritten Klemmbacken der beiden Klemmeinrichtungen in Bezug auf eine senkrecht zur Achse der Welle verlaufende, zwischen den beiden Klemmeinrichtungen liegende weitere Symmetrieebene spiegelbildlich zueinander angeordnet sind, und wenn zur Verstellung der beiden dritten Klemmbacken eine einzige parallel zur Achse der Welle angeordnete Stellschraube vorgesehen ist, welche die beiden dritten Klemmbacken durchsetzt und gegeneinander verspannt. Auf diese Weise ist eine besonders sichere und absolut spielfreie Befestigung des Trägers an der Welle gewährleistet, da die beiden hülsenförmigen Ansätze in zwei in axialer Richtung der Welle im Abstand voneinander liegenden Klemmzonen an der Welle klemmend festgehalten sind. Dies ist dann besonders vorteilhaft, wenn der Träger in Richtung der Achse der Welle relativ grosse Abmessungen aufweist. Durch das Festklemmen in zwei Klemmzonen ist mit Sicherheit erreicht, dass der Träger bei seiner Rotation weder in radialer Richtung noch in axialer Richtung einen Schlag aufweist. Hierbei ist noch festzuhalten, dass trotz des Festklemmens des Trägers an der Welle in zwei in axialer Richtung der Welle in Abstand voneinander liegenden Klemmzonen auf Grund der kleinen Betätigungskräfte zum Festklemmen stets gewährleistet ist, dass keine Verbiegung der Welle auftritt und damit die aus einer solchen Verbiegung resultierenden Störungen vermieden sind. Als besonders vorteilhaft ist weiters die Tatsache anzusehen, dass mit der gemeinsamen Stellschraube in einem einzigen Vorgang beide Klemmeinrichtungen betätigbar sind, was besonders einfach und zeitsparend ist.

Die Klemmbacken und die Verbindungsbalken der Klemmeinrichtung können für sich als separate Bauteile ausgebildet sein, die beispielsweise mit entsprechenden Bohrungen versehen sind, in die Achsverbindungen zur Bildung der Gelenke eingeführt sind. Als besonders vorteilhaft hat sich jedoch erwiesen, wenn die erste Klemmbacke und die zweite Klemmbacke und die Verbindungsbalken der Klemmeinrichtung als einstückige Klemmplatte ausgebildet sind und wenn die Gelenke durch in der Klemmplatte vorgesehene, im wesentlichen senkrecht zur Achse der Welle elastisch deformierbare Schwachstellen gebildet sind. Auf diese Weise wird eine besonders kompakte, einfache und betriebssichere Ausbildung erhalten, wobei die Klemmplatte leicht und billig auf mechanisierte Weise in einem einfachen Stanzvorgang herstellbar ist.

Als vorteilhaft hat sich auch erwiesen, wenn die erste Klemmbacke und die zweite Klemmbacke starr miteinander verbunden und durch die Schenkel eines im wesentlichen V-förmigen Klemmstückes gebildet sind, an dessen beiden Schenkeln je eine an dem hülsenförmigen Ansatz in einer Tangentialebene desselben anliegende Klemmfläche vorgesehen ist und wenn die dritte Klemmbacke im wesentlichen senkrecht zur Achse der Welle mit der Einstellvorrichtung verstellbar ist. Hierdurch ist eine sehr einfach betätigbare Klemmeinrichtung geschaffen, die auch den Anforderungen hinsichtlich eines exakten Festklemmens genügt und die weiter einfach und stabil aufgebaut ist, wodurch eine hohe Betriebssicherheit erreicht wird.

Hinsichtlich des Zusammenwirkens zwischen der dritten Klemmbacke und dem V-förmigen Klemmstück stehen verschiedene Möglichkeiten offen. Beispielsweise kann die dritte Klemmbacke mit den beiden Schenkeln des Klemmstückes über je eine Stellschraube verbunden sein. Im Hinblick auf eine einfache Ausbildung hat sich als vorteilhaft erwiesen, wenn die dritte Klemmbacke mit mindestens einem der beiden Schenkel des Klemmstückes in gelenkiger Verbindung steht.

In diesem Zusammenhang hat sich weiters als vorteilhaft erwiesen, wenn mit jedem der beiden Schenkel des Klemmstückes über je ein Gelenk ein Verbindungsbalken verbunden ist, welche beiden Verbindungsbalken ihrerseits in gelenkiger Verbindung stehen und in Bezug auf die Symmetrieebene zu den beiden Tangentialebenen spiegelbildlich zueinander angeordnet sind, und wenn die dritte Klemmbacke sich an einem mit den Verbindungsbalken in gelenkiger Verbindung stehenden, im wesentlichen symmetrisch zur Symmetrieebene zu den beiden Tangentialebenen angeordneten Gegenlager abgestützt und zur Bildung der kraftschlüssigen Verbindung des Trägers mit der Welle gegenüber diesem Gegenlager verstellbar ist. Hierdurch ist eine einfache und stabile Ausbildung geschaffen, die einen praktisch symmetrischen Aufbau besitzt, so dass trotz der Verstellung von nur einer Klemmbacke zum Festklemmen des hülsenförmigen Ansatzes an der Welle auf einfache Weise eine gleichmässige Kräfteverteilung gewährleistet ist. Hiermit ist ein exaktes Festklemmen des hülsenförmigen Ansatzes an der Welle erreicht, ohne dass es zu einer Verbiegung der Welle kommen kann.

Hinsichtlich des Zusammenwirkens zwischen der dritten Klemmbacke und dem V-förmigen Klemmstück hat sich in diesem Zusammenhang aber auch als vorteilhaft erwiesen, wenn die dritte Klemmbacke im wesentlichen als Balken ausgebildet ist und mit einem Balkenende über ein Gelenk unmittelbar mit einem Schenkel des Klemmstückes und mit dem anderen Balkenende über eine als Einstellvorrichtung vorgesehene, im wesentlichen quer zur Achse der Welle angeordnete Stellschraube mit dem anderen Schenkel des Klemmstückes zur Bildung der kraftschlüssigen Verbindung des Trägers mit der Welle verstellbar verbunden ist. Auf diese Weise ist ebenfalls eine einfache und robuste Klemmeinrichtung erhalten, die vor dem Anbringen der Stellschraube wie eine Zange geöffnet und in radialer Richtung auf den hülsenförmigen Ansatz aufgesetzt werden kann, was aus konstruktiven Gegebenheiten bezüglich des Trägers vorteilhaft sein kann.

Als vorteilhaft hat sich weiters erwiesen, wenn die erste Klemmbacke, die zweite Klemmbacke und die dritte Klemmbacke durch je einen gegenüber der Welle geneigt verlaufenden, von einem zur Achse der Welle koaxialen Ring radial zur Welle hin auskragenden Lappen gebildet sind, deren freie Enden die Klemmflächen bilden, und wenn mit der Einstellvorrichtung alle drei Klemmbacken mit ihrer Klemmfläche im wesentlichen senkrecht zur Achse der Welle, durch Verschieben des Ringes in Richtung der Achse der Welle, verstellbar sind. Auch hierdurch ergibt sich ein einfacher Aufbau für die Klemmeinrichtung, die ein exaktes Festklemmen des hülsenförmigen Ansatzen an der Welle gewährleistet.

Die Erfindung wird im folgenden an Hand von einigen in den Zeichnungen dargestellten Ausführungsbeispielen, auf welche die Erfindung jedoch nicht beschränkt ist, näher beschrieben. Es zeigt die

Figur 1 schematisch in Draufsicht eine Teil eines Aufzeichnungs- und/oder Wiedergabegerätes für einen bandförmigen Aufzeichnungträger, der teilweise um eine zweiteilige Führungstrommel für denselben geschlungen ist,

Figur 2 einen Schnitt längs der Linie II-II in Fig. 1 durch die Führungstrommel der Gerätes gemäss Fig. 1 wobei der einen Teil der Führungstrommel bildende Träger für die Magnetköpfe mit einer Klemmeinrichtung gemäss einem ersten Ausführungsbeispiel der Erfindung an der Antriebswelle für denselben klemmend befestigt ist, die

Figur 3 in einer Draufsicht gemäss der Linie III-III in Fig. 2 einen Teil der Führungstrommel gemäss Fig. 2 mit der Klemmeinrichtung gemäss dem ersten Ausführungsbeispiel in gegenüber der Fig. 2 vergrössertem Massstab, die

Figur 4 einen Schnitt gemäss der Linie IV-IV in Fig. 3, die

Figur 5 analog wie die Fig. 3 in einer Draufsicht einen Teil einer Führungstrommel mit einer Klemmeinrichtung gemäss einem zweiten Ausführungsbeispiel der Erfindung, die

Figur 6 einen Schnitt gemäss der Linie IV-IV in Fig. 5, die

Figur 7 analog wie die Fig. 3 und 5 in einer Draufsicht einen Teil einer Führungstrommel mit einer Klemmeinrichtung gemäss einem dritten Ausführungsbeispiel der Erfindung, die

Figur 8 einen Schnitt gemäss der Linie VIII-VIII in Fig 7, die

Figur 9 analog wie die Fig. 3, 5 und 7 in einer Draufsicht einen Teil einer Führungstrommel mit einer Klemmeinrichtung gemäss einem vierten Ausführungsbeispiel der Erfindung, die

Figur 10 ebenfalls in einer Draufsicht einen Teil einer Führungstrommel mit einer Klemmeinrichtung gemäss einem fünften Ausführungsbeispiel der Erfindung, die

Figur 11 auch in einer Draufsicht einen Teil einer Führungstrommel mit einer Klemmeinrichtung gemäss einem sechsten Ausführungsbeispiel der Erfindung, die

Figur 12 analog wie die Fig. 3, 5, 7, 9, 10 und 11 in einer Draufsicht einen Teil einer Führungstrommel mit einer Klemmeinrichtung gemäss einem siebenten Ausführungsbeispiel der Erfindung und die Fig. 13 einen Schnitt gemäss der Linie XIII-XIII in Fig. 12.

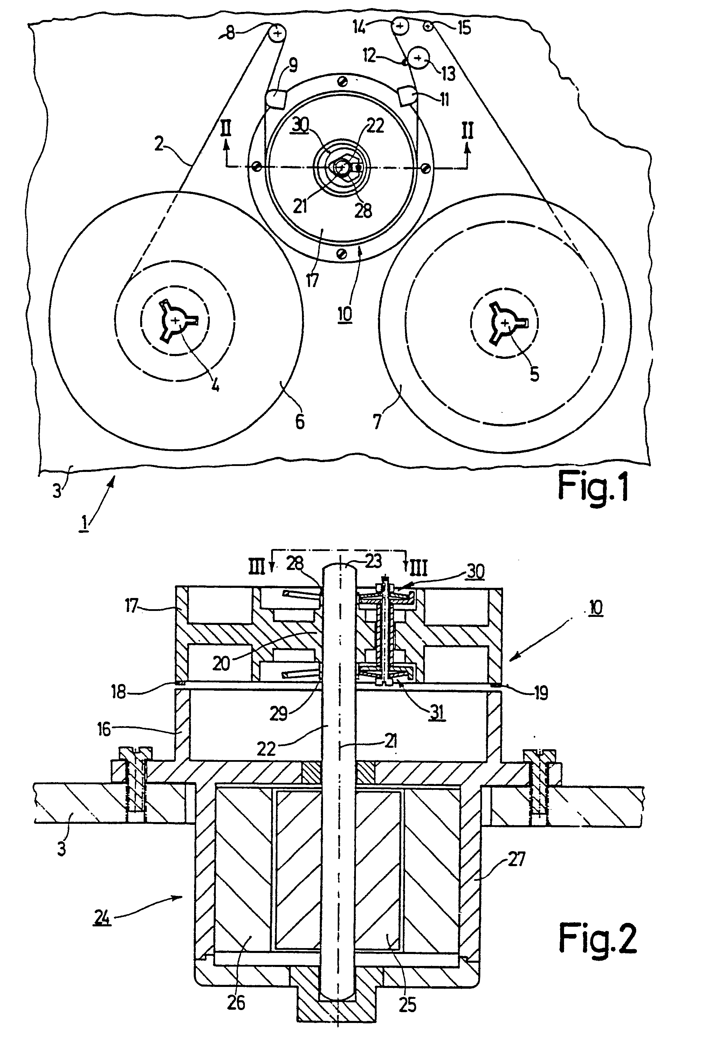

In Fig. 1 ist schematisch ein Teil eines Aufzeichnungs- und/oder Wiedergabegerätes 1 zum Aufzeichnen und/oder Wiedergeben von Bild- und Toninformationen auf einem magnetisierbaren, bandförmigen Aufzeichnungsträger 2, im folgenden kurz Band genannt, dargestellt. Das Gerät 1 weist eine Grundplatte 3 auf, die einen Abwickeldorn 4 und einen Aufwickeldorn 5 trägt, welche zum Antreiben einer Abwickelspule 6 bzw. einer Aufwickelspule 7 dienen, die auf den entsprechenden Wickeldorn 4 bzw. 5 aufgesetzt sind. In seinem Verlauf von der Abwickelspule 6 zu der Aufwickelspule 7 ist das Band 2 über einen Bandführungsstift 8 zum Umlenken des Bandes, über einen Löschmagnetkopf 9 zum Löschen der gesamten auf dem Band gegebenenfalls gespeicherten Informationen, über eine Bandführungstrommel 10, die nachfolgend noch näher beschrieben ist, über einen Aufzeichnungs- und/oder Wiedergabe-Magnetkopf 11 zum Aufzeichnen und/oder Wiedergeben von Toninformationen auf das Band bzw. von dem Band, über eine Antriebswelle 12, die im Zusammenwirken mit einer auf nicht näher dargestellte Weise an die Antriebswelle andrückbaren Andruckrolle 13 zur gleichförmigen Fortbewegung des Bandes bei einem Aufzeichnungs- und/oder Wiedergabevorgang dient, und über zwei weitere Bandführungsstifte 14 und 15 zum Umlenken des Bandes 2 geführt. Selbstverständlich können die Abwickelspule 6 und die Aufwickelspule 7 auch in einer Kassette untergebracht sein, wobei dann das Band mit Hilfe einer entsprechenden Einrichtung aus der Kassette herausführbar und um die vorerwähnten Bauteile schlingbar ist.

Wie bei derartigen Geräten vielfach üblich, wird das Band schraubenlinienförmig um die Mantelfläche der Bandführungstrommel geführt, wobei mindestens ein innerhalb derselben untergebrachter, rotierend antreibbarer Magnetkopf zum Aufzeichnen und/oder Wiedergeben von Bildinformationen mit dem Band in Wirkverbindung tritt und das Band entlang von schräg zur Längsrichtung desselben verlaufenden Informationsspuren abtastet. Wie aus Fig. 2 ersichtlich ist, besteht beim vorliegenden Ausführungsbeispiel die Bandführungstrommel 10 aus einer auf der Grundplatte 3 fest montierten stillstehenden Trommelhälfte 16 und aus einer zu dieser koaxialen rotierend antreibbaren Trommelhälfte 17.

Die rotierend antreibbare Trommelhälfte 17, die in vorliegendem Fall als Träger für zwei an derselben angebrachte Magnetköpfe 18 und 19 zum Aufzeichnen- und/oder Wiedergeben von Bildinformationen dient, weist eine Nabe 20 auf, mit der die Trommelhälfte 17 mit einer um eine Achse 21 rotierend antreibbaren Welle 22 an deren freien Ende 23 kraftschlüssig verbunden ist. Der Antrieb der Welle 22 und damit der als Träger für die Magnetköpfe 18 und 19 vorgesehenen Trommelhälfte 17 erfolgt in Form eines Direktantriebes, wobei ein schematisch dargestellter Motor 24 unmittelbar mit der Welle 22 zusammenwirkt, indem der Rotor 25 des Motors koaxial auf die Welle aufgesetzt und mit derselben verbunden ist. Der Stator 26 des Motors ist hierbei in einem Motorgehäuse 27 untergebracht, das mit der stillstehenden Trommelhälfte 16 zu einer Einheit zusammengefasst ist. Auf diese Weise bilden der Motor 24 und die gesamte Bandführungstrommel 10 eine einfache auf der Grundplatte 3 montierbare Baueinheit.

Die Nabe 20 weist nun zwei entgegengesetzt auskragende, hohlzylindrische, koaxial zur Welle verlaufende, hülsenförmige Ansätze 28 und 29 auf, an denen je eine auf dieselben aufgesetzte lösbare Klemmeinrichtung 30 bzw. 31 angreift, die zur kraftschlüssigen Verbindung der Trommelhälfte 17 mit der Welle 22 den entsprechenden hülsenförmigen Ansatz 28 bzw. 29 im Bereich von zwei in axialer Richtung der Welle in Abstand voneinander liegenden Klemmzonen an der Welle 22 klemmend festhält. Dabei ist es für eine einwandfreie und zufriedenstellende Funktion des Gerätes im Hinblick auf einen ordnungsgemässen Aufzeichnungs- und/oder Wiedergabevorgang der Bildinformationen mit den dafür vorgesehenen Magnetköpfen von ausschlaggebender Bedeutung, dass die als Träger für die Magnetköpfe dienende rotierend antreibbare Trommelhälfte 17 mit Hilfe der Klemmeinrichtungen 30 und 31 exakt und sicher an der Welle 22 festgeklemmt ist, ohne dass die Welle beim Festklemmen eine Verbiegung oder die Lager der Welle eine Beschädigung erleiden, so dass die Trommelhälfte 17 absolut gleichmässig und ohne Schlag umläuft.

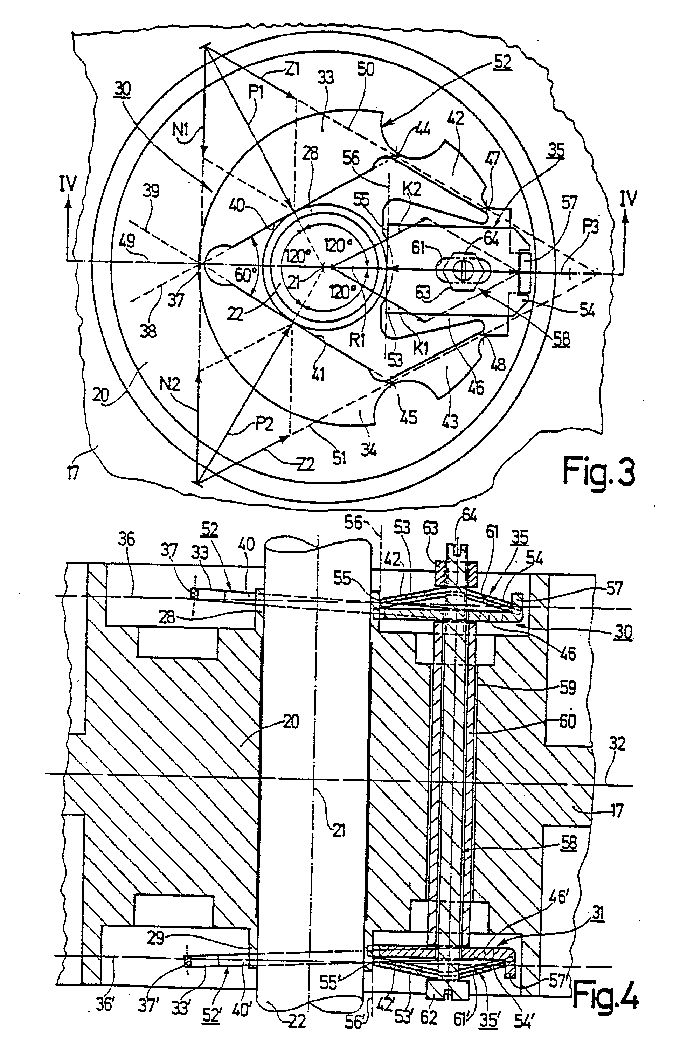

Im folgenden werden die beiden Klemmeinrichtungen 30 und 31 an Hand der Fig. 3 und 4 beschrieben. Wie aus diesen Figuren ersichtlich ist, sind die beiden Klemmeinrichtungen vollkommen gleich ausgebildet und in Bezug auf eine in Fig. 4 mit einer strichlierten Linie angedeutete senkrecht zur Achse 21 der Welle 22 verlaufende, zwischen den beiden Klemmeinrichtungen 30 und 31 liegende Symmetrieebene 32 spiegelbildlich zueinander angeordnet. Aus diesem Grunde sind im folgenden die einzelnen einander entsprechenden Teile der beiden Klemmeinrichtungen 30 und 31 mit gleichen Bezugszeichen versehen, wobei den Bezugszeichen für die Teile der Klemmeinrichtung 31 ein Apostroph hinzugefügt ist.

Jeder der beiden Klemmeinrichtungen 30 und 31 weist eine erste Klemmbacke 33 bzw. 33', eine zweite Klemmbacke 34 bzw. 34' und eine dritte Klemmbacke 35 bzw. 35' auf, die untereinander kraftschlüssig in Verbindung stehen. Die drei Klemmbacken jeder Klemmeinrichtung 30 bzw. 31 weisen je eine an dem hülsenförmigen Ansatz in einer Tangentialebene desselben anliegende Klemmfläche auf und greifen in Umfangsrichtung der Welle 22 in einem gegenseitigen Winkelabstand von je 120° und in einem gleichen senkrecht zur Welle verlaufenden, in Fig. 4 durch je eine strichlierte Linie angegebenen Niveau 36 bzw. 36' an dem hülsenförmigen Ansatz 28 bzw. 29 an.

Die erste Klemmbacke 33 bzw. 33' und die zweite Klemmbacke 34 bzw. 34' jeder Klemmeinrichtung sind als plattenförmige Klemmhebel ausgebildet, die über ein erstes Gelenk 37 bzw. 37' miteinander verbunden sind. Die beiden Klemmhebel 33 und 34 bzw. 34' weisen je eine an dem entsprechenden hülsenförmigen Ansatz 28 bzw. 29 in einer in Fig. 3 durch je eine strichlierte Linie angegebene Tangentialebene 38 und 39 bzw. 38' und 39' desselben anliegende Klemmfläche 40 und 41 bzw. 40' und 41' auf, die in diesem Fall als ebene Fläche ausgebildet ist. Die beiden Tangentialebenen 38 und 39 bzw. 38' und 39', in denen die Klemmflächen 40 und 41 bzw. 40' und 41' des ersten Klemmhebels 33 bzw. 33' und des zweiten Klemmhebels 34 bzw. 34' an dem entsprechenden hülsenförmigen Ansatz 28 bzw. 29 anliegen, schliessen einen Winkel von 60° miteinander ein.

Die beiden Klemmeinrichtungen 30 und 31 weisen weiters je einen ersten plattenförmigen Verbindungsbalken 42 bzw. 42' und einen zweiten plattenförmigen Verbindungsbalken 43 bzw. 43' auf. Der erste Verbindungsbalken 42 bzw. 42' ist mit dem ersten Klemmhebel 33 bzw. 33' über ein zweites Gelenk 44 bzw. 44' und der zweite Verbindungsbalken 43 bzw. 43' ist mit dem zweiten Klemmhebel 34 bzw. 34' über ein drittes Gelenk 45 bzw. 45' verbunden. Zwischen dem ersten Verbindungsbalken 42 bzw. 42' und dem zweiten Verbindungsbalken 43 bzw. 43' ist ein dritter plattenförmiger Verbindungsbalken 46 bzw. 46' eingefügt, der mit dem ersten Verbindungsbalken über ein erstes weiteres Gelenk 47 bzw. 47' und mit dem zweiten Verbindungsbalken über ein zweites weiteres Gelenk 48 bzw. 48' verbunden ist.

Die Gelenkachsen aller Gelenke verlaufen im wesentlichen parallel zur Achse 21 der Welle 22. Im vorliegenden Fall nehmen die Gelenkachse zwar einen kleinen Winkel von etwa 3° gegenüber der Achse der Welle ein, was aber keinen Einfluss auf die Funktionsfähigkeit der Klemmeinrichtungen hat und als vernachlässigbar klein anzusehen ist. Die Gelenkachse des ersten Gelenks 37 bzw. 37' liegt in der durch die Achse 21 der Welle 22 hindurchgehenden, in Fig. 3 mit einer strichpunktierten Linie angegebenen Symmetrieebene 49 bzw. 49' zu den beiden Tangentialebenen 38 und 39 bzw. 38' und 39' in denen die Klemmflächen 40 und 41 bzw. 40' und 41' der ersten Klemmbacke 33 bzw. 33' und der zweiten Klemmbacke 34 bzw. 34' an dem hülsenförmigen Ansatz 28 bzw. 29 anliegen. Weiters sind die Gelenkachse des zweiten Gelenks 44 bzw. 44' und die Gelenkachse des dritten Gelenks 45 bzw. 45' jeder Klemmeinrichtung in Bezug auf die durch die Achse 21 der Welle 22 und durch die Gelenkachse des ersten Gelenks 37 bzw. 37' hindurchgehende Symmetrieebene 49 bzw. 49' zu den beiden Tangentialebenen 38 und 39 bzw. 38' und 39' spiegelbildlich zueinander angeordnet. Ausserdem ist die Anordnung der Gelenke noch so gewählt, dass eine durch die Gelenkachsen des zweiten und des ersten weiteren Gelenks am ersten Verbindungsbalken 42 bzw. 42' hindurchgehende, mit einer strichlierten Linie angegebene erste Verbindungsebene 50 bzw. 50' und eine durch die Gelenkachsen des dritten und des zweiten weiteren Gelenks am zweiten Verbindungsbalken 43 bzw. 43' hindurchgehende, ebenfalls mit einer strichlierten Linie angegebene zweite Verbindungsebene 51 bzw. 51' sich in der Symmetrieebene 49 bzw. 49' zu den beiden Tangentialebenen 38 und 39 bzw. 38' und 39' schneiden.

Wie aus den Fig. 3 und 4 zu ersehen ist, sind der erste Klemmhebel und der zweite Klemmhebel und die drei Verbindungsbalken jeder der beiden Klemmeinrichtungen 30 und 31 als einstückige Klemmplatte 52 bzw. 52' ausgebildet und sind die Gelenke durch in jeder Klemmplatte 52 bzw. 52' vorgesehene, im wesentlichen senkrecht zur Achse 21 der Welle 22 elastisch deformierbare Schwachstellen gebildet. Auf diese Weise ist eine besonders einfache, kompakte und stabile Ausbildung erhalten.

Die dritte Klemmbacke 35 bzw. 35' jeder der beiden Klemmeinrichtungen 30 bzw. 31 ist bei diesem Ausführungsbeispiel durch einen federnden, längs einer senkrecht zur Symmetrieebene 49 bzw. 49' verlaufenden Biegekante V-förmig abgebogenen Spreizwinkel gebildet, der einen ersten Spreizschenkel 53 bzw. 53' und einen zweiten Spreizschenkel 54 bzw. 54' aufweist. Dabei ist der Spreizwinkel 35 bzw. 35' aus zwei aneinanderliegenden Lagen einer am freien Ende 55 bzw. 55' des ersten Spreizschenkels 53 bzw. 53' um 180° abgebogenen Blattfeder gebildet. Das abgebogene freie Ende 55 bzw. 55' des ersten Spreizschenkel 53 bzw. 53', das an dem dritten Verbindungsbalken 46 bzw. 46' aufliegt, bildet hierbei die an dem entsprechenden hülsenförmigen Ansatz 28 bzw. 29 in einer senkrecht zur Symmetrieebene 49 bzw. 49' zu den beiden Tangentialebenen 38 und 39 bzw. 38' und 39' verlaufenden, in den Fig. 3 und 4 mit einer strichlierten Linie angegebenen weiteren Tangentialebene 56 bzw. 56' desselben anliegende Klemmfläche der dritten Klemmbacke 35 bzw. 35', welche Klemmfläche hierbei einen gekrümmten Verlauf aufweist. Das freie Ende des zweiten Spreizschenkels 54 bzw. 54' stützt sich an einem abgewinkelten Stützlappen 57 bzw. 57' des als Gegenlager für den Spreizwinkel vorgesehenen, über die beiden weiteren Gelenke 47 und 48 bzw. 47' und 48' mit dem ersten Verbindungsbalken 42 bzw. 42' und dem zweiten Verbindungsbalken 43 bzw. 43' verbundenen Verbindungsbalken 46 bzw. 46' ab. Die kraftschlüssige Verbindung der dritten Klemmbacke 35 bzw. 35' mit der ersten und der zweiten Klemmbacke 33 und 34 bzw. 33' und 34', die ihrerseits über das erste Gelenk 37 bzw. 37' kraftschlüssig miteinander verbunden sind, ist somit über den als Gegenlager für die dritte Klemmbacke vorgesehenen dritten Verbindungsbalken 46 bzw. 46' und den ersten und den zweiten Verbindungsbalken 42 und 43 bzw. 42' und 43' gegeben.

Zur Bildung der kraftschlüssigen Verbindung der Trommelhälfte 17 mit der Welle 22 ist der als dritte Klemmbacke vorgesehene Spreizwinkel 35 bzw. 35' jeder der beiden Klemmeinrichtungen 30 und 31 mit seiner durch das freie Ende 55 bzw. 55' des ersten Spreizschenkels 53 bzw. 53' gebildeten Klemmfläche senkrecht zur Achse 21 der Welle 22 gegenüber dem als Gegenlager für den Spreizwinkel vorgesehenen dritten Verbindungsbalken 46 bzw. 46' verstellbar. Hierzu greift an jedem Spreizwinkel 35 bzw. 35' im Bereich der Biegekante desselben eine als Einstellvorrichtung dienende Stellschraube 58 an, durch deren Betätigung die beiden Spreizschenkel jedes Spreizwinkels zum Festklemmen des entsprechenden hülsenförmigen Ansatzes 28 bzw. 29 an der Welle 22 auseinanderspreizbar sind. Bei vorliegendem Ausführungsbeispiel ist zur Verstellung der beiden Spreizwinkel 35 bzw. 35' der Klemmeinrichtungen 30 und 31 eine einzige parallel zur Achse der Welle angeordnete Stellschraube vorgesehen. Die Stellschraube 58 ist durch eine Bohrung 59 in der rotierend antreibbaren Trommelhälfte 17 hindurchgeführt, wobei auf die Stellschraube eine Hülse 60 aufgeschoben ist, an deren freien Enden sich je der dritte Verbindungsbalken 46 bzw. 46' der beiden Klemmeinrichtungen 30 und 31 abstützt. Auf diese Weise sind die beiden Klemmeinrichtungen in axialer Richtung der Welle in einem gegenseitigen Abstand voneinander festgelegt. Die Stellschraube 58 durchsetzt die beiden Spreizwinkel 35 und 35', wobei dieselbe durch hierfür in den Spreizwinkeln vorgesehene langlochförmige Ausnehmungen 61 bzw. 61' hindurchgeführt ist. Der Kopf 62 des Schraubenbolzens der Stellschraube 58 stützt sich hierbei an dem der stillstehenden Trommelhälfte 16 zugewandten Spreizwinkel 35' ab, und die Schraubenmutter 63 greift an dem freien Ende 23 der Welle 22 zugewandten Spreizwinkel 35 an. Auf diese Weise sind die beiden Spreizwinkel 35 und 35' durch die Stellschraube 58 gegeneinander vorgespannt. Die Stellschraube 58 ist an dem Ende, an dem die Schraubenmutter 63 sitzt, mit einem Betätigungsschlitz 64 versehen, so dass sowohl der Schraubenbolzen der Stellschraube 58 als auch die Schraubenmutter 63 derselben zur Betätigung im Bereich des freien Endes der Welle leicht zugänglich sind.

Beim Verstellen des Spreizwinkels 35 bzw. 35' jeder Klemmeinrichtung 30 bzw. 31 zum Festklemmen des entsprechenden hülsenförmigen Ansatzes 28 bzw. 29 an der Welle 22, was durch entsprechende Betätigung der Stellschraube 58 erfolgt, üben die beiden Klemmhebel 33 und 34 bzw. 33' und 34' und der Spreizwinkel 35 bzw. 35' je eine senkrecht zu der Tangentialebene 38, 39 und 56 bzw. 38', 39' und 56', in der die Klemmfläche 40, 41 und 55 bzw. 40', 41' und 55' desselben an dem hülsenförmigen Ansatz 28 bzw. 29 anliegt, verlaufende Klemmkraft P1, P2 und P3 bzw. P1', P2' und P3' auf den hülsenförmigen Ansatz 28 bzw. 29 aus.

Die von dem ersten Klemmhebel 33 bzw. 33' auf den hülsenförmigen Ansatz 28 bzw. 29 ausgeübte Klemmkraft P1 bzw. P1' weist eine erste Kraftkomponente N1 bzw. N1' auf, die senkrecht zur Symmetrieebene 49 bzw. 49' zu den beiden Tangentialebenen 38 und 39 bzw. 38' und 39' verlaufend durch die Gelenkachse des ersten Gelenks 37 bzw. 37' hindurchgeht. Ebenso weist die von dem zweiten Klemmhebel 34 bzw. 34' auf den hülsenförmigen Ansatz 28 bzw. 29 ausgeübte Klemmkraft P2 bzw. P2' eine erste Kraftkomponente N2 bzw. N2' auf, die senkrecht zur Symmetrieebene 49 bzw. 49' zu den beiden Tangentialebenen 38 und 39 bzw. 38' und 39' verlaufend durch die Gelenkachse des ersten Gelenks 37 bzw. 37' hindurchgeht. Hierdurch ist erreicht, dass nach erfolgtem Festklemmen auf das erste Gelenk nur senkrecht zur der Symmetrieebene 49 bzw. 49' verlaufende Kräfte einwirken, so dass das erste Gelenk seine eingenommene Lage beibehält und damit auch keine Veränderung der Lage des ersten Klemmhebels 33 bzw. 33' und des zweiten Klemmhebels 34 bzw. 34' gegenüber dem hülsenförmigen Ansatz 28 bzw. 29 erfolgt. Somit ist gewährleistet, dass der Winkel von 60° zwischen den beiden Tangentialebenen 38 und 39 bzw. 38' und 39', in denen die Klemmflächen 40 und 41 bzw. 40' und 41' an dem hülsenförmigen Ansatz 28 bzw. 29 angreifen, stets beibehalten ist. Hierdurch ist aber erreicht, dass die drei Klemmkräfte P1, P2 und P3 bzw. P1', P2' und P3' gleichmässig um 120° um den Umfang des hülsenförmigen Ansatzes 28 bzw. 29 verteilt an demselben angreifen, wodurch ein vollkommen symmetrisches Festklemmen der beiden Ansätze 28 und 29 an der Welle 22 möglich ist.

Die von dem ersten Klemmhebel 33 bzw. 33' auf den hülsenförmigen Ansatz 28 bzw. 29 ausgeübte Klemmkraft P1 bzw. P1' weist ferner eine zweite Kraftkomponente Z1 bzw. Z1' auf, die in der ersten Verbindungsebene 50 bzw. 50' liegt und somit durch die Gelenkachse des zweiten Gelenks 44 bzw. 44' und durch die Gelenkachse des ersten weiteren Gelenks 47 bzw. 47' hindurchgeht. In Analogie hierzu weist die von dem zweiten Klemmhebel 34 bzw. 34' auf den hülsenförmigen Ansatz 28 bzw. 29 ausgeübte Klemmkraft P2 bzw. P2' eine zweite Kraftkomponente Z2 bzw. Z2' auf, die in der zweiten Verbindungsebene 51 bzw. 51' liegt und somit durch die Gelenkachse des dritten Gelenks 45 bzw. 45' und durch die Gelenkachse des zweiten weiteren Gelenks 48 bzw. 48' hindurchgeht. Die von dem ersten Spreizschenkel 53 bzw. 53' des Spreizwinkels 35 bzw. 35' auf den hülsenförmigen Ansatz 28 bzw. 29 ausgeübte Klemmkraft P3 bzw. P3', die in der Symmetrieebene 49 bzw. 49' zu den beiden Tangentialebenen 38 und 39 bzw. 38' und 39' liegend durch die Gelenkachse des ersten Gelenks 37 bzw. 37' hindurchgeht, hat über den zweiten Spreizschenkel 54 bzw. 54' des Spreizwinkels, der sich mit seinem freien Ende an dem abgewinkelten Stützlappen 57 bzw. 57' des dritten Verbindungsbalkens 46 bzw. 46' abstützt, eine auf den dritten Verbindungsbalken einwirkende Reaktionskraft R1 bzw. R1' zur Folge, die die gleiche Grösse wie die Klemmkraft P3 und P3' aufweist und ebenfalls in der Symmetrieebene 49 bzw. 49' verläuft. Die Reaktionskraft R1 bzw. R1' weist eine in der ersten Verbindungsebene 50 bzw. 50' liegende, über das erste weitere Gelenk 47 bzw. 47' an dem ersten Verbindungsbalken 42 bzw. 42' angreifende erste Kraftkomponente K1 bzw. K1' und eine in der zweiten Verbindungsebene 51 bzw. 51' liegende, über das zweite weitere Gelenk 48 bzw. 48' an dem zweiten Verbindungsbalken 43 bzw. 43' angreifende zweite Kraftkomponente K2 bzw. K2' auf. Hierbei sind die beiden in der ersten Verbindungsebene liegenden Kraftkomponenten Z1 und K1 bzw. Z1' und K1' der Klemmkraft P1 bzw. P1' und der Reaktionskraft R1 bzw. R1' und die in der zweiten Verbindungsebene 51 bzw. 51' liegenden Kraftkomponenten Z2 und K2 bzw. Z2' und K2' der Klemmkraft P2 und P2' und der Reaktionskraft R1 bzw. R1' aus Gründen des Kräftegleichgewichtes gleich gross. Weiters sind auf Grund des symmetrischen Aufbaues jeder der beiden Klemmeinrichtungen 30 und 31 bezüglich der Symmetrieebene 49 bzw. 49' auch die beiden Kraftkomponenten K1 und K2 bzw. K1' und K2' der Reaktionskraft R1 bzw. R1' gleich gross. Auf Grund dieses Sachverhaltes ist erreicht, dass die zwei Klemmkräfte P1 und P2 bzw. P1' und P2' und die Reaktionskraft R1 bzw. R1' und daher auch die dritte Klemmkraft P3 bzw. P3' alle gleich gross sind. Dies ist im Hinblick auf eine gleichmässig um den Umfang des hülsenförmigen Ansatz 28 bzw. 29 verteilte Klemmwirkung besonders wichtig, da hierdurch eine gleichmässige Belastung der Welle erzielt ist und somit eine Verbiegung der Welle beim Festklemmen der rotierend antreibbaren Trommelhälfte 18 ausgeschlossen ist.

Zum Befestigen der rotierend antreibbaren Trommelhälfte 17 an der Welle 22 werden zuerst die Klemmplatten 52 bzw. 52' der beiden Klemmeinrichtungen 30 und 31 auf die hülsenförmigen Ansätze 28 bzw. 29 aufgesetzt, wonach die beiden Spreizwinkel 35 bzw. 35' und die Stellschraube 58 angebracht werden, ohne dass die Stellschraube eine Betätigungskraft auf die Spreizwinkel zum Auseinanderspreizen derselben ausübt. Auf diese Weise bildet die Trommelhälfte 17 samt den beiden Klemmeinrichtungen 30 und 31 eine vormontierte Baueinheit, die in einfacher Weise auf die Welle 22 aufschiebbar ist. Nach erfolgtem Aufschieben der vormontierten Baueinheit auf die Welle, wobei die Trommelhälfte zur genauen Positionierung in ihrer axialen Lage durch nicht dargestellte Positioniereinrichtungen, wie Anschläge oder dergleichen, positioniert wird, werden durch einfache Betätigung der Stellschraube zugleich beide Klemmeinrichtungen betätigt und die Trommelhälfte in zwei in axialer Richtung der Welle in Abstand voneinander liegenden Klemmzonen an der Welle festgeklemmt. Die Betätigung der Stellschraube 58 erfolgt beispielsweise mit einem in den Schlitz 64 des Schraubenbolzens einsetzbaren Schraubenzieher, wobei die Schraubenmutter von Hand aus oder mit einem Werkzeug festgehalten wird. Zum Abnehmen der rotierend antreibbaren Trommelhälfte 17 wird die Stellschraube 58 einfach im umgekehrten Sinne betätigt, wodurch die Klemmwirkung der beiden Klemmeinrichtungen 30 und 31 wieder aufgehoben wird und die Trommelhälfte samt den daran angebrachten Klemmeinrichtungen von der Welle leicht abgenommen werden kann.

Die beiden Klemmeinrichtungen klemmen die beiden hülsenförmigen Ansätze in vollkommen symmetrischer und statisch bestimmter Weise an der Welle fest, da die drei auf jeden Ansatz einwirkenden Klemmkräfte gleich gross sind und in einem gegenseitigen Winkelabstand von genau 120° und in einem gleichen senkrecht zur Achse der Welle verlaufenden Niveau liegen. Auf diese Weise ist jeder Verbiegung der Welle durch das Angreifen der beiden Klemmeinrichtungen an der Welle, was über die hülsenförmigen Ansätze erfolgt, vorgebeugt. Da die Klemmeinrichtungen die hülsenförmigen Ansätze je nur an drei Bereichen an der Welle festklemmen, sind zum Festklemmen nur kleine Betätigungskräfte erforderlich, da die hülsenförmigen Ansätze nur an den drei Klemmbereichen zusammengedrückt werden müssen und nicht um ihren gesamten Umfang. Zum Festklemmen ist es dabei lediglich erforderlich, eine der Klemmbacken jeder Klemmeinrichtung zu verstellen, was auf einfache Weise mit nur einer einzigen Stellschraube durchführbar ist. Auch sind zum Festklemmen der beiden Klemmeinrichtungen nur sehr kleine von der Stellschraube aufzubringende Betätigungskräfte erforderlich, da durch die Spreizwinkel ein sehr hohes Kräfteübersetzungsverhältnis erzielt wird. Somit besteht durch das Aufbringen der Betätigungskräfte keine Gefahr einer Verbiegung der Welle oder einer eventuellen Beschädigung der Lager der Welle. Da die Stellschraube in Richtung der Achse der Welle angeordnet ist, und die Betätigung derselben vom freien Ende der Welle her vorgenommen wird, ist auch der Vorteil der leichten Zugänglichkeit und Einfachheit der Betätigung der Klemmeinrichtung erhalten.

Hierdurch ist erreicht, dass die rotierend antreibbare Trommelhälfte sehr leicht und rasch ausgewechselt werden kann, wenn beispielsweise die Magnetköpfe auf der Trommelhälfte zu stark abgenützt oder beschädigt sind. Als besonders vorteilhaft ist der einfache Aufbau jeder der beiden Klemmeinrichtungen zu beurteilen, was insbesondere auf die Zusammenfassung des ersten und zweiten Klemmhebels und der drei Verbindungsbalken zu einer einstückigen Klemmplatte zurückzuführen ist. Auf diese Weise ist ein Gerät geschaffen, bei dem die rotierend antreibbare Trommelhälfte sehr einfach, leicht und rasch auf der Antriebswelle befestigt werden kann und dabei sicher und exakt auf derselben festgehalten ist, ohne dass eine Verbiegung der Welle oder eine Beschädigung der Lager der Welle auftreten kann. Hierdurch ist erreicht, dass die rotierend antreibbare Trommelhälfte absolut ohne Schlag rotiert, wodurch stets ein optimaler und störungsfreier Aufzeichnungs- und/oder Wiedergabevorgang von Bildinformationen mit den hierfür vorgesehenen, von der rotierend antreibbaren Trommelhälfte getragenen Magnetköpfen erzielt wird.

Bezüglich des vorstehend erläuterten Ausführungsbeispiels ist noch darauf hinzuweisen, dass es selbstverständlich nicht zwingend ist, dass die beiden Klemmeinrichtungen vollkommen identisch ausgebildet sind. Insbesondere im Hinblick auf die Ausbildung der Spreizwinkel ist darauf zu verweisen, dass es durchaus möglich ist, die beiden Spreizwinkel unterschiedlich auszubilden, etwa um unterschiedlich grosse Klemmkräfte in beiden in axialer Richtung in Abstand voneinander liegenden Klemmzonen zu erhalten. Dies kann beispielsweise im Hinblick auf einen Ausgleich von unterschiedlichen Temperatureinflüssen im Bereich der Klemmzonen von Wichtigkeit und Vorteil sein. Unterschiedlich grosse Klemmkräfte in den beiden Klemmzonen sind auch dadurch erreichbar, dass die Klemmplatten der beiden Klemmeinrichtungen aus unterschiedlichen Materialien, wie etwa Stahl und Messing, bestehen. Auch ist noch zu erwähnen, dass die Schraubenmutter der Betätigungsschraube in einen Käfig eingeschlossen werden kann, der absolut sicher ein Mitdrehen der Schraubenmutter bei der Verdrehung des Schraubenbolzens der Stellschraube verhindert ; ein solcher Käfig kann beispielsweise in einer das freie Ende der rotierend antreibbaren Trommelhälfte abschliessenden, an derselben befestigten Abdeckplatte vorgesehen sein, in der dann lediglich eine Bohrung angebracht ist, durch welche hindurch der Schlitz im Schraubenbolzen der Stellschraube zugänglich ist. Schliesslich ist noch darauf zu verweisen, dass ein Festklemmen der rotierend antreibbaren Trommelhälfte an der Welle auch nur mit einer einzigen, wie vorstehend beschriebenen Klemmeinrichtung möglich ist.

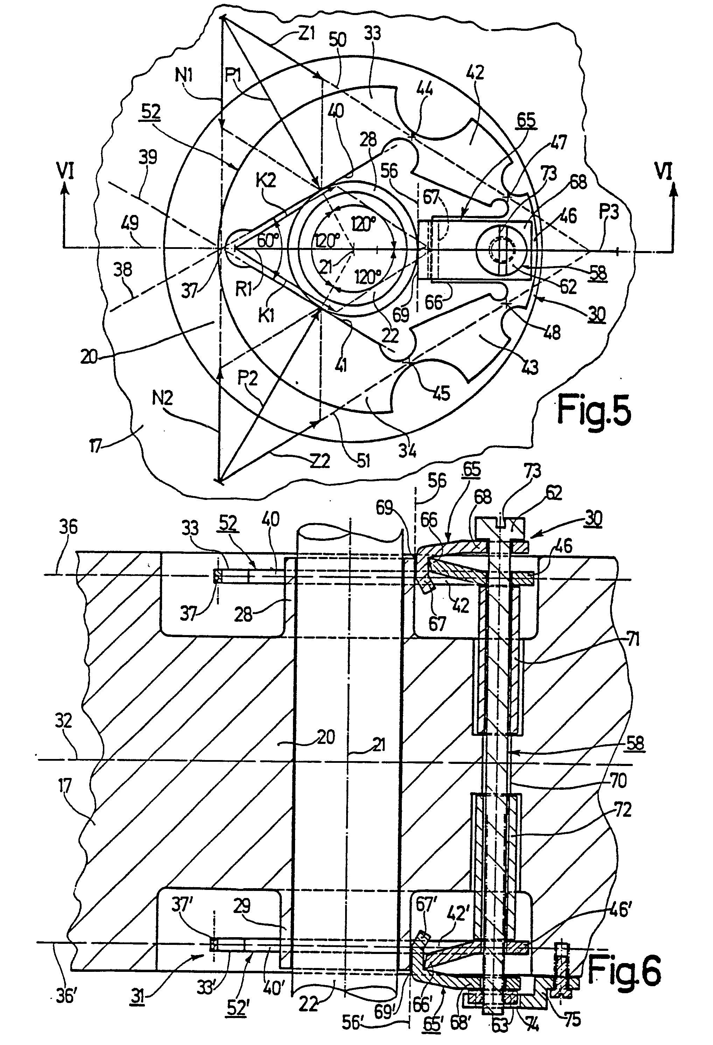

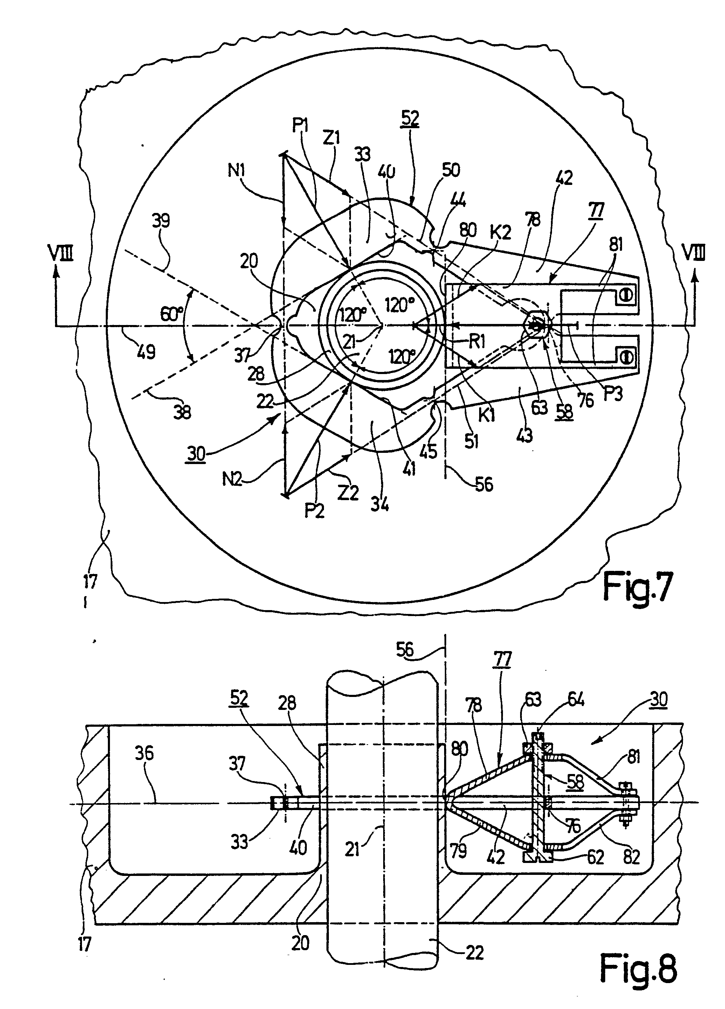

Beim Ausführungsbeispiel gemäss den Fig. 5 und 6 weisen die Klemmeinrichtungen einen ähnlichen Aufbau wie jene beim vorstehend beschriebenen Ausführungsbeispiel auf. In diesem Fall ist jedoch die dritte Klemmbacke jeder der beiden Klemmeinrichtungen 30 und 31 durch einen L-förmig abgewinkelten Bügel 65 bzw. 65' gebildet. Der Bügel 65 bzw. 65' ist an dem dritten Verbindungsbalken 46 bzw. 46' schwenkbar gelagert, wobei der dritte Verbindungsbalken einen etwas aus der Ebene der Klemmplatte 52 bzw. 52' abgebogenen Lappen 66 bzw. 66' aufweist, an dem sich der Bügel 65 bzw. 65' stützt. Auf diese Weise bildet das freie Ende des Lappens 66 bzw. 66' eine senkrecht zur Symmetrieebene 49 bzw. 49' zu den beiden Tangentialebenen 38 und 39 bzw. 38' und 39' verlaufende Schwenkachse für den Bügel 65 bzw. 65'. Die Kraftschlüssige Verbindung der dritten Klemmbacke 65 bzw. 65' mit der ersten und der zweiten Klemmbacke 33 und 34 bzw. 33' und 34' die ihrerseits über das erste Gelenk 37 bzw. 37' kraftschlüssig verbunden sind, ist somit über den als Gegenlager für die dritte Klemmbacke vorgesehenen dritten Verbindungsbalken 46 bzw. 46' und den ersten und den zweiten Verbindungsbalken 42 und 43 bzw. 42' und 43' gegeben. Der Bügel weist einen im wesentlichen parallel zur Achse 21 der Welle 22 verlaufenden ersten Schenkel 67 bzw. 67' und einen im wesentlichen senkrecht zur Achse der Welle verlaufenden zweiten Schenkel 68 bzw. 68' auf. Dabei ist die Klemmfläche, mit der der Bügel 65 bzw. 65' an dem hülsenförmigen Ansatz 28 bzw. 29 in der senkrecht zur Symmetrieebene 49 bzw. 49' verlaufenden Tangentialebene 56 bzw. 56' desselben anliegt, durch die dem hülsenförmigen Ansatz 28 bzw. 29 zugewandte Schenkelfläche 69 bzw. 69' des ersten Schenkels 67 bzw. 67' des Bügels 65 bzw. 65' gebildet.

Zum Festklemmen des hülsenförmigen Ansatzes 28 bzw. 29 an der Welle 22 greift an dem zweiten Schenkel 68 bzw. 68' jedes Bügels 65 bzw. 65' eine für den Bügel gemeinsame, als Einstellvorrichtung dienende Stellschraube 58 an, welche die beiden zweiten Schenkel durchsetzt und gegeneinander verspannt. Die Stellschraube ist in diesem Fall durch eine doppelt abgesetzte Bohrung 70 in der rotierend antreibbaren Trommelhälfte 17 hindurchgeführt, in welcher Bohrung von entgegengesetzten Seiten her zwei auf den Schraubenbolzen der Stellschraube aufgeschobene Stützhülsen 71 und 72 eingeführt sind. An den freien Enden der Stützhülsen stützen sich die beiden dritten Verbindungsbalken 46 bzw. 46' der Klemmeinrichtungen 30 bzw. 31 ab, wodurch die beiden Klemmeinrichtungen in axialer Richtung der Welle in einem bestimmten Abstand voneinander festgelegt sind. Der Schraubenkopf 62 der Stellschraube 58, der mit einem Betätigungsschlitz 73 versehen ist, wirkt mit dem freien Ende der Welle 22 zugewandten Bügel 65 der Klemmeinrichtung zusammen, während die Schraubenmutter 63 an dem anderen Bügel 65' der Klemmeinrichtung 31 angreift. Die Schraubenmutter 63 ist dabei gegen Verdrehung dadurch gesichert, dass sie in einem entsprechend ausgebildeten gabelförmigen Ende 74 eines an der Trommelhälfte 17 befestigten Bügels 75 angeordnet ist.

Die Funktionsweise der Klemmeinrichtungen gemäss diesem Ausführungsbeispiel ist analog zu der Funktionsweise des zuvor beschriebenen Ausführungsbeispieles. Hingewiesen sei nur darauf, dass bei vorliegendem Ausführungsbeispiel die der Klemmkraft P3 bzw. P3′ entsprechende Reaktionskraft R1 bzw. R1′ von dem ersten Schenkel 67 bzw. 67′ des Bügels 65 bzw. 65′ auf den abgebogenen Lappen 66 bzw. 66′ des dritten Verbindungsbalkens 46 bzw. 46′ übertragen wird. Im Hinblick auf die Vorzüge dieser Klemmeinrichtungen ist zusätzlich noch darauf hinzuweisen, dass durch die Ausbildung der dritten Klemmbacke als einfacher L-förmiger Bügel eines besonders grosse Robustheit und Betriebssicherheit erreicht ist. Selbstverständlich müssen auch in diesem Fall die Klemmeinrichtungen nicht vollkommen identisch ausgebildet sein ; beispielsweise können die Bügel der beiden Klemmeinrichtungen unterschiedlich lange erste Schenkel aufweisen, wodurch unterschiedlich grosse Klemmkräfte in den beiden in axialer Richtung in Abstand voneinander liegenden Klemmzonen erreicht werden, um beispielsweise unterschiedliche Temperatureinflüsse im Bereich der beiden Klemmzonen auszugleichen. Auch kann nur eine einzige derart ausgebildete Klemmeinrichtung verwendet werden, um die rotierend antreibbare Trommelhälfte an der Welle zu befestigen.

In den Fig. 7 und 8 ist ein Ausführungsbeispiel dargestellt, bei dem die rotierend antreibbare Trommelhälfte 17 an ihrer Nabe 20 nur einen hülsenförmigen Ansatz 28 aufweist, so dass dementsprechend diese Trommelhälfte 17 mit nur einer Klemmeinrichtung 30 an der Welle 22 klemmend befestigt ist. Die Klemmeinrichtung 30 weist wieder eine einstückig ausgebildete Klemmplatte 52 auf, die aus einem ersten Klemmhebel 33 und einem zweiten Klemmhebel 34 sowie aus einem ersten Verbindungsbalken 42 und einem zweiten Verbindungsbalken 43 besteht, wobei aber nunmehr die beiden Verbindungsbalken 42 und 43 unmittelbar über nur ein einziges weiteres Gelenk 76 miteinander verbunden sind.

Als dritte Klemmbacke ist bei diesem Ausführungsbeispiel ein längs einer senkrecht zur Symmetrieebene 49 zu den beiden Tangentialebenen 38 und 39 verlaufenden Biegekante V-förmig abgebogener federnder Klemmwinkel 77 vorgesehen, der einen ersten Schenkel 78 und einen zweiten Schenkel 79 aufweist. Die beiden Schenkel 78 und 79 sind gegenüber der Klemmplatte 52 spiegelbildlich zueinander angeordnet. Der abgebogene Übergangsbereich 80, der die beiden Schenkel 78 und 79 miteinander verbindet, bildet dabei die an dem hülsenförmigen Ansatz 28 in der senkrecht zur Symmetrieebene 49 verlaufenden weiteren Tangentialebene 56 desselben anliegende Klemmfläche der dritten Klemmbacke.

Durch die freien Enden der beiden Schenkel 78 und 79, die im wesentlichen parallel zur Klemmplatte 52 verlaufend abgebogen sind, ist eine als Einstellvorrichtung dienende Stellschraube 58 hindurchgeführt, deren Schraubenkopf 62 mit dem freien Ende des Schenkels 79 und deren Schraubenmutter 63 mit dem freien Ende des Schenkels 78 zusammenwirkt, wodurch die beiden Schenkel 78 und 79 des Klemmwinkels 77 zueinander verspannt sind. Die Stellschraube 58 stützt sich in ihrem mittleren Bereich an dem weiteren Gelenk 76 ab. Auf diese Weise bildet das weitere Gelenk 76 selbst ein Gegenlager, an dem sich der als dritte Klemmbacke vorgesehene Klemmwinkel 77 über die Stellschraube 58 abstützt. Auf Grund dieser Ausbildung wird die der Klemmkraft P3 entsprechende Reaktionskraft R1 von der Stellschraube 58 direkt auf das weitere Gelenk 76 übertragen. Die kraftschlüssige Verbindung der dritten Klemmbacke 77 mit der ersten und der zweiten Klemmbacke 33 und 34, die ihrerseits über das erste Gelenk 37 kraftschlüssig miteinander verbunden sind, ist somit über das als Gegenlager für die dritte Klemmbacke wirksame weitere Gelenk 76 und den ersten und den zweiten Verbindungsbalken 42 und 43 gegeben.

Die Schenkel 78 und 79 des Klemmwinkels 77 gehen an ihren freien Enden in je zwei schmale, streifenförmige Befestigungsansätze 81 bzw. 82 über, mit welchen der Klemmwinkel 77 an dem ersten Verbindungsbalken 42 und dem zweiten Verbindungsbalken 43 befestigt ist. Die Befestigungsansätze halten den Klemmwinkel 77 samt der damit verbundenen Stellschraube 58 in einer symmetrischen Lage gegenüber der Klemmplatte 52 fest, sie üben aber keinen Einfluss im Hinblick auf das Festklemmen der Klemmeinrichtung aus.

Da der Klemmwinkel samt der damit verbundenen Klemmschraube über die Befestigungssätze mit der Klemmplatte stets verbunden ist, bilden diese Bauteile eine einfach zu handhabende Baueinheit, was sehr vorteilhaft ist. Diese Baueinheit wird in einfacher Weise durch Aufstecken in Richtung der Achse der Welle auf den hülsenförmigen Ansatz einer an der Welle zu befestigenden rotierend antreibbaren Trommelhälfte aufgesetzt, ohne dass der Klemmwinkel eine Klemmwirkung auf den hülsenförmigen Ansatz ausübt. Hierauf wird die Trommelhälfte samt der auf ihren hülsenförmigen Ansatz aufgesetzten Klemmeinrichtung auf die Welle aufgeschoben und in einer gewünschten Lage positioniert. Danach wird durch einfache Betätigung der als Einstellvorrichtung dienenden Stellschraube, wobei die freien Enden der Schenkel des Klemmwinkels zueinander bewegt werden und hierdurch die Klemmfläche am Klemmwinkel gegen den hülsenförmigen Ansatz gedrückt wird, die Klemmeinrichtung betätigt, wodurch der hülsenförmige Ansatz an der Welle festgeklemmt wird. Auf diese Weise ist damit die rotierend antreibbare Trommelhälfte an der Welle klemmend festgehalten. Auch die Klemmeinrichtung gemäss diesem Ausführungsbeispiel gewährleistet ein exaktes, sicheres und gleichmässiges festklemmen der rotierend antreibbaren Trommelhälfte an der Welle, wobei durch die Klemmwirkung der Klemmeinrichtung keine Verbiegung der Welle eintreten kann. Auch sind in diesem Fall nur sehr kleine Betätigungskräfte zum Festklemmen der Klemmeinrichtung erforderlich, da die Klemmeinrichtung nur an drei Klemmbereichen an dem hülsenförmigen Ansatz angreift. Weiters ist im Hinblick auf eine kleine Betätigungskraft zusätzlich als vorteilhaft zu beurteilen, dass mit dem Klemmwinkel ebenfalls ein grosses Kräfteübersetzungsverhältnis erreicht ist. Ebenso zeichnet sich diese Klemmeinrichtung durch eine besonders einfache und leicht und rasch durchzuführende Bedienung aus. Weiters ist es vorteilhaft, dass die gesamte Klemmeinrichtung als vormontierbare Baueinheit ausgebildet ist, was im Hinblick auf eine einfache Anbringung bei der Montage derselben an dem hülsenförmigen Ansatz vorteilhaft ist.

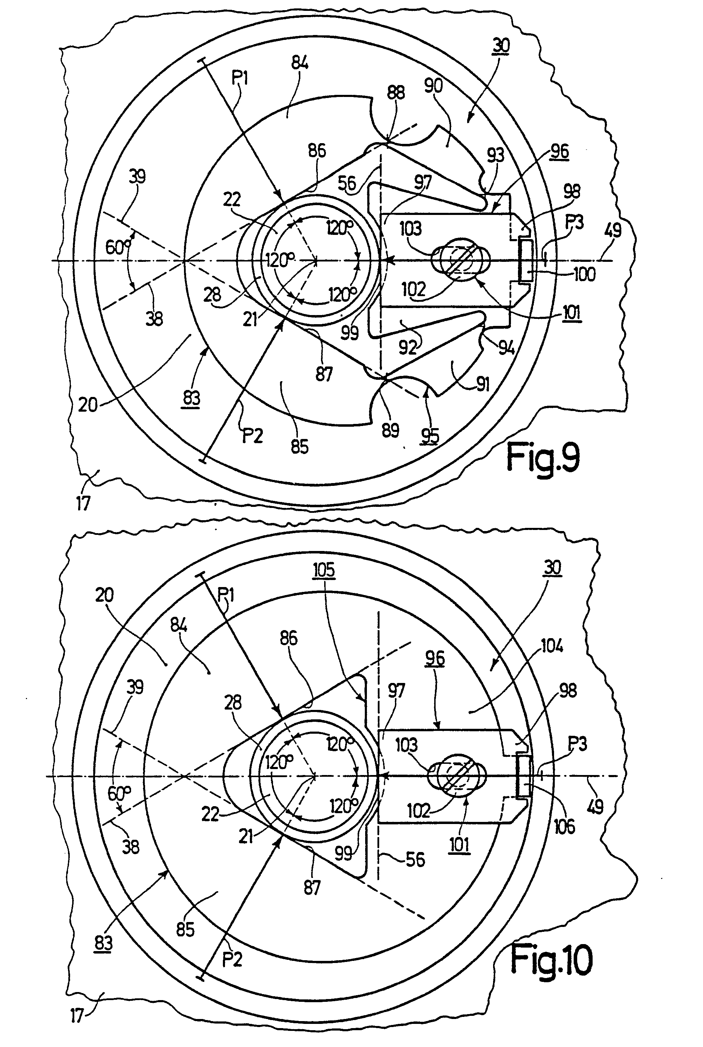

Die Fig. 9 zeigt ein Ausführungsbeispiel, bei dem die rotierend antreibbare Trommelhälfte 17 an ihrer Nabe auch nur einen hülsenförmigen Ansatz 28 aufweist, der an der Welle 20 mit einer Klemmeinrichtung 30 festgeklemmt ist. Die Klemmeinrichtung 30 weist ein im wesentlichen V-förmiges plattenförmiges Klemmstück 83 auf, das einen ersten Schenkel 84 und einen mit demselben starr verbundenen zweiten Schenkel 85 aufweist. Der erste Schenkel 84 bildet dabei die erste Klemmbacke und der zweite Schenkel 85 die zweite Klemmbacke der Klemmeinrichtung 30, die kraftschlüssig und in diesem Fall auch formschlüssig miteinander verbunden sind. An den beiden Schenkeln 84 und 85 des Klemmstückes 83 ist je eine an dem hülsenförmigen Ansatz 28 in einer Tangentialebene 38 bzw. 39 desselben anliegende Klemmfläche 86 und 87 vorgesehen, die durch die ebenen Stirnflächen der Schenkel 84 und 85 gebildet sind. Die Tangentialebenen 38 bzw. 39, in denen die Klemmflächen 86 und 87 der ersten Klemmbacke 84 und der zweiten Klemmbacke 85 an dem hülsenförmigen Ansatz anliegen, schliessen einen Winkel von 60° miteinander ein.

Mit jedem der beiden Schenkel 84 und 85 des plattenförmigen Klemmstückes 83 ist über je ein Gelenk 88 bzw. 89 ein plattenförmiger Verbindungsbalken 90 bzw. 91 verbunden, die ihrerseits auch in gelenkiger Verbindung stehen. Und zwar ist hierzu ein plattenförmiger dritter Verbindungsbalken 92 über ein Gelenk 93 mit dem ersten Verbindungsbalken 90 und über ein Gelenk 94 mit dem zweiten Verbindungsbalken 91 verbunden. Wie die Fig. 9 zeigt, sind der erste und der zweite Verbindungsbalken in Bezug auf die durch die Achse 21 der Welle 22 hindurchgehende Symmetrieebene 49 zu den beiden Tangentialebenen 38 und 39 spiegelbildlich zueinander angeordnet und ist auch der dritte Verbindungsbalken 92 symmetrisch zu dieser Symmetrieebene 49 angeordnet. Das Klemmstück 83 und die drei Verbindungsbalken 90, 91 und 92 sind als einstückige Klemmplatte 95 ausgebildet, wobei die Gelenke 88, 89, 93 und 94 durch in der Klemmplatte vorgesehene, im wesentlichen senkrecht zur Achse 21 der Welle 22 deformierbare Schwachstellen gebildet sind.

Der dritte Verbindungsbalken 92 dient als Gegenlager für eine dritte Klemmbacke 96, die in vorliegendem Fall durch einen aus einer einfachen Blattfeder gebildeten, längs einer senkrecht zur Symmetrieebene 49 verlaufenden Biegekante abgebogenen Spreizwinkel gebildet ist. Ein ähnlich ausgebildeter, jedoch zweilagiger Spreizwinkel ist bereits vorstehend an Hand des Ausführungsbeispieles gemäss den Fig. 3 und 4 beschrieben. Der Spreizwinkel 96 weist einen ersten Spreizschenkel 97 und einen zweiten Spreizschenkel 98 auf. Dabei bildet das freie Ende 99 des ersten Spreizschenkels 97, das am dritten Verbindungsbalken 92 aufliegt, eine an dem hülsenförmigen Ansatz 28 in einer senkrecht zu der durch die Achse 21 der Welle 22 hindurchgehenden Symmetrieebene 49 zu den beiden Tangentialebenen 38 und 39 in denen die Klemmflächen 86 und 87 der ersten Klemmbacke 84 und der zweiten Klemmbacke 85 an dem hülsenförmigen Ansatz 28 anliegen, verlaufenden weiteren Tangentialebene 56 desselben anliegende Klemmfläche der dritten Klemmbacke 96. Das freie Ende des zweiten Spreizschenkels 98 liegt ebenfalls am dritten Verbindungsbalken 92 auf und stützt sich an einem vom dritten Verbindungsbalken abgebogenen Stützlappen 100 ab. Auf diese Weise ist die kraftschlüssige Verbindung der dritten Klemmbacke 96 mit der ersten und der zweiten Klemmbacke 84 und 85, die ihrerseits selbst kraftschlüssig und formschlüssig miteinander verbunden sind, über den als Gegenlager für die dritte Klemmbacke 96 vorgesehenen dritten Verbindungsbalken 92 und den ersten und den zweiten Verbindungsbalken 90 und 91 gegeben.

Zur kraftschlüssigen Verbindung der als Träger vorgesehenen rotierend antreibbaren Trommelhälfte 17 mit der Welle 22 ist die als Spreizwinkel ausgebildete dritte Klemmbacke 96 mit ihrer durch das freie Ende des ersten Spreizschenkels 97 gebildeten Klemmfläche 99 im wesentlichen senkrecht zur Achse 21 der Welle 22 mit der Einstellvorrichtung verstellbar. In vorliegendem Fall ist die Einstellvorrichtung durch eine Stellschraube 101 gebildet, die sich mit ihrem Schraubenkopf 102 an dem Spreizwinkel 96 im Bereich der Biegekante desselben abstützt und deren Schraubenbolzen durch eine langlochförmige Öffnung 103 im Spreizwinkel hindurchgeführt ist und auf nicht näher dargestellte Weise in die Trommelhälfte 17 einschraubbar ist. Durch eintsprechendes Betätigen der Stellschraube 101 wird der Spreizwinkel 96 gegen den dritten Verbindungsbalken 92 gedrückt, wobei die mit ihren freien Enden am dritten Verbindungsbalken aufliegenden Spreizschenkel 97 und 98 auseinandergespreizt werden. Hierbei wird dann die durch das freie Ende des ersten Spreizschenkels 97 gebildete Klemmfläche 99 der dritten Klemmbacke im wesentlichen senkrecht zur Achse 21 der Welle 22 verschoben, wobei der hülsenförmige Ansatz 28 an der Welle 22 durch die drei untereinander in kraftschlüssiger Verbindung stehenden Klemmbacken festgeklemmt wird.

Wie aus Fig. 9 deutlich erkennbar ist, greifen die drei untereinander kraftschlüssig in Verbindung stehenden Klemmbacken 84, 85 und 96 mit ihren Klemmflächen 86, 87 und 99 in Umfangsrichtung der Welle 22 in einem gegenseitigen Winkelabstand von je 120° und im wesentlichen in einem gleichen senkrecht zur Achse der Welle verlaufenden Niveau an dem hülsenförmigen Ansatz 28 an. Auch sind die Klemmkräfte P1, P2 und P3, die in Fig. 9 schematisch dargestellt sind, gleich gross.

Auf diese Weise ist eine Klemmeinrichtung geschaffen mit der die rotierend antreibbare Trommelhälfte exakt und sicher an der Welle festgeklemmt ist, wobei die Klemmeinrichtung den hülsenförmigen Ansatz nur an drei Klemmbereichen an der Welle festklemmt, so dass zum Festklemmen mit einer kleinen Betätigungskraft das Auslangen gefunden wird. Zum Festklemmen ist dabei mit nur einer leicht zugänglichen Stellschraube lediglich ein Spreizwinkel zu verstellen, mit dem ein hohes Kräfteübersetzungsverhältnis erreicht wird. Durch die einfache Betätigung der Klemmeinrichtung kann auch ein mehrmaliges Montieren und Demontieren der rotierend antreibbaren Trommelhälfte, beispielsweise um die auf derselben angebrachten Magnetköpfe auszutauschen oder zu reinigen, leicht und reproduzierbar durchgeführt werden. Durch die symmetrisch ausgebildete gelenkige Verbindung der zu verstellenden Klemmbacke mit dem Klemmstück ist auf einfache Weise eine gleichmässige Klemmwirkung gewährleistet. Als vorteilhaft ist hierbei noch zu erwähnen, dass das Klemmstück und die Verbindungsbalken als einstückige Platte ausgebildet sind, wodurch ein einfacher Aufbau der Klemmeinrichtung erhalten wird und diese Klemmeinrichtung sehr preiswert in Massenproduktion herstellbar ist. Es ist somit eine genaue, betriebssichere und einfache Klemmeinrichtung geschaffen, durch deren Klemmwirkung bzw. bei deren Betätigung keine Verbiegung der Welle und keine Beschädigung der Lager der Welle auftreten kann, wodurch gewährleistet ist, dass die rotierend antreibbare Trommelhälfte absolut sicher ohne Schlag umläuft, was wie bereits erwähnt für einen guten und störungsfreien Aufzeichnungs- und/oder Wiedergabevorgang von ausschlaggebender Bedeutung ist.

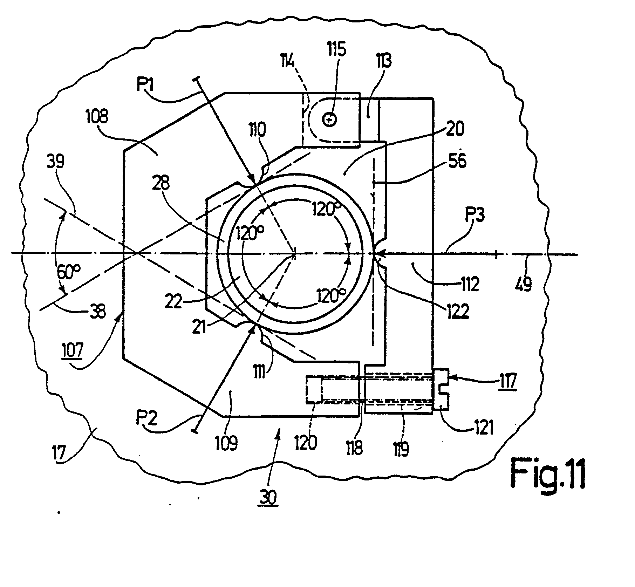

Die Klemmeinrichtung 30 gemäss dem in Fig. 10 dargestellten Ausführungsbeispiel weist ebenfalls ein im wesentlichen V-förmig ausgebildetes, plattenförmiges Klemmstück 83 mit einem ersten Schenkel 84 und einem mit diesem kraftschlüssig und formschlüssig verbundenen zweiten Schenkel 85 auf. Die beiden Schenkel 84 und 85 bilden die erste und die zweite Klemmbacke der Klemmeinrichtung und weisen je eine Klemmfläche 86 und 87 auf, die je in einer Tangentialebene 38 bzw. 39 des hülsenförmigen Ansatzes 28 an demselben anliegen. Die dritte Klemmbacke 96 ist ebenso wie jene der Klemmeinrichtung gemäss dem in Fig. 9 dargestellten Ausführungsbeispiel als einfacher Spreizwinkel ausgebildet, wobei das freie Ende 99 des ersten Spreizschenkels 97 die Klemmfläche der dritten Klemmbacke bildet, die in der senkrecht zur Symmetrieebene 49 zu den beiden Tangentialebenen 38 und 39 verlaufenden weiteren Tangentialebene 56 des hülsenförmigen Ansatzes 28 an demselben anliegt. Die dritte Klemmbacke 96 ist zur Bildung der kraftschlüssigen Verbindung der rotierend antreibbaren Trommelhälfte 17 mit der Welle 22 mit ihrer Klemmfläche 99 senkrecht zur Achse 21 der Welle 22 mit Hilfe der als Einstellvorrichtung vorgesehenen Stellschraube 101 verstellbar.

Als Gegenlager für die dritte Klemmbacke 96 ist in diesem Fall ein symmetrisch zur Symmetrieebene 49 zu den beiden Tangentialebenen 38 und 39 angeordneter plattenförmiger Verbindungsbalken 104 vorgesehen, der mit den beiden Schenkeln 84 und 85 des Klemmstückes 83 starr verbunden ist. Das Klemmstück 83 und der Verbindungsbalken 104 bilden dabei wieder eine einstückig ausgebildete Klemmplatte 105. An dem als Gegenlager für den Spreizwinkel 96 vorgesehenen Verbindungsbalken 104 liegt der Spreizwinkel mit den freien Enden seiner beiden Spreizschenkel 97 und 98 auf, wobei sich weiters das freie Ende des zweiten Spreizschenkels 98 an einem vom Verbindungsbalken 104 abgebogenen Stützlappen 106 abstützt. Auf diese Weise ist die kraftschlüssige Verbindung zwischen der dritten Klemmbacke 96 und der ersten und der zweiten Klemmbacke 84 und 85, die ihrerseits selbst kraftschlüssig und formschlüssig miteinander verbunden sind, über den als gegenlager für die dritte Klemmbacke 96 vorgesehenen Verbindungsbalken 104 gegeben, der mit der ersten und der zweiten Klemmbacke zu der einstückigen Klemmplatte 105 kraftschlüssig und formschlüssig verbunden ist.

Auch in diesem Fall greifen die kraftschlüssig untereinander in Verbindung stehenden Klemmbacken in einem im wesentlichen gleichen senkrecht zur Welle verlaufenden Niveau und in Umfangsrichtung der Welle in einem gegenseitigen Winkelabstand von 120° an drei Klemmstellen mit drei gleich grossen Klemmkräften an dem hülsenförmigen Ansatz an, wodurch eine genaue, sichere und statisch bestimmte Klemmwirkung erzielt ist. Die Klemmeinrichtung gemäss vorstehend erläutertem Ausführungsbeispiel weist einen sehr einfachen Aufbau auf, was im Hinblick auf Robustheit und Betriebssicherheit der Klemmeinrichtung vorteilhaft ist.

An dieser Stelle sei erwähnt, dass bei Klemmeinrichtungen, wie sie an Hand der Fig. 9 und 10 vorstehend beschrieben sind, selbstverständlich auch andere Ausbildungen für die dritte Klemmbacke geeignet sind, etwa solche, wie sie bei den Klemmeinrichtungen gemäss den Fig. 5 und 6 bzw. 7 und 8 verwendet sind.

Die Fig. 11 zeigt eine Klemmeinrichtung 30 mit einem im wesentlichen V-förmigen Klemmstück 107, dessen beide als erste und zweite Klemmbacke vorgesehenen Schenkel 108 und 109 als Klemmflächen je eine in Richtung der Achse 21 der Welle 22 verlaufende, vom Schenkel zur Welle hin vorspringende Rippe 110 bzw. 111 aufweist.

Die Rippen 110 und 111 liegen dabei je in einer Tangentialebene 38 bzw. 39 des hülsenförmigen Ansatzes 28 an demselben an, wobei diese beiden Tangentialebenen einen Winkel von 60° miteinander einschliessen. Die dritte Klemmbacke dieser Klemmeinrichtung ist im wesentlichen als Balken 112 ausgebildet. Der Balken 112 weist ein abgewinkeltes, gegenüber dem Balken zweiseitig abgestuftes Balkenende 113 auf, das in einen nutartigen Einschnitt 114 am freien Ende des ersten Schenkels 108 des Klemmstückes 107 eingeführt ist und mit dem ersten Schenkel 108 über ein Gelenk 115 unmittelbar verbunden ist. Mit dem anderen Balkenende 116 ist der Balken 112 über eine als Einstellvorrichtung vorgesehene, im wesentlichen quer zur Achse 21 der Welle 22 angeordnete Stellschraube 117 mit dem anderen Schenkel 109 des Klemmstückes 107 zur Bildung der kraftschlüssigen Verbindung der rotierend antreibbaren Trommelhälfte 17 mit der Welle 22 verstellbar verbunden. Hierzu ist der Schraubenbolzen 118 durch eine im Bereich des Balkenendes 116 vorgesehene Bohrung 119 hindurchgeführt und in eine Gewindebohrung 120 im Schenkel 109 des Klemmstückes 107 eingeschraubt, wobei sich der Schraubenkopf 121 am Balkenende 112 abstützt. Auf diese Weise ist die dritte Klemmbacke 112 einerseits über das Gelenk 115 mit der ersten Klemmbacke 108 und über die Stellschraube 117 mit der zweiten Klemmbacke 109 kraftschlüssig verbunden, wobei die erste und die zweite Klemmbacke selbst kraftschlüssig und formschlüssig zu dem einstückigen Klemmstück 107 verbunden sind.

Der Balken 112 trägt als Klemmfläche eine in Richtung der Achse der Welle verlaufende, zur Welle hin vorspringende Rippe 122, die an dem hülsenförmigen Ansatz in der senkrecht zu der durch die Achse der Welle hindurchgehenden Symmetrieebene 49 zu den beiden Tangentialebenen 38 und 39, in denen die Rippen 110 und 111 an dem hülsenförmigen Ansatz 28 anliegen, verlaufenden weiteren Tangentialebene 56 desselben anliegt. Zur Bildung der kraftschlüssigen Verbindung der rotierend antreibbaren Trommelhälfte 17 mit der Welle 22 ist der als dritte Klemmbacke vorgesehene Balken 112 mit seiner als Klemmfläche dienenden Rippe 122 im wesentlichen senkrecht zur Achse 21 der Welle 22 mit der Stellschraube 117 verstellbar.

Zum Festklemmen des hülsenförmigen Ansatzes 28 an der Welle 22 wird die Stellschraube 117 entsprechend betätigt, wobei dann die drei Rippen 110, 111 und 122 in einem gleichen senkrecht zur Achse der Welle verlaufenden Niveau und in Umfangsrichtung der Welle in einem gegenseitigen Winkelabstand von je 120° mit gleich grossen Klemmkräften P1, P2 und P3 an dem hülsenförmigen Ansatz angreifen. Auch bei dieser Klemmeinrichtung sind nur kleine Betätigungskräfte aufzubringen, da die Klemmeinrichtung nicht längs des gesamten Umfanges des hülsenförmigen Ansatzes wirksam ist, sondern nur an drei gleichmässig zueinander versetzten Klemmbereichen. Diese Klemmeinrichtung weist auch einen sehr einfachen Aufbau auf und kann vor dem Anbringen der Stellschraube durch entsprechendes Verschwenken des Balkens gegenüber dem Klemmstück wie eine Zange geöffnet und danach in radialer Richtung auf den hülsenförmigen Ansatz aufgesetzt werden.

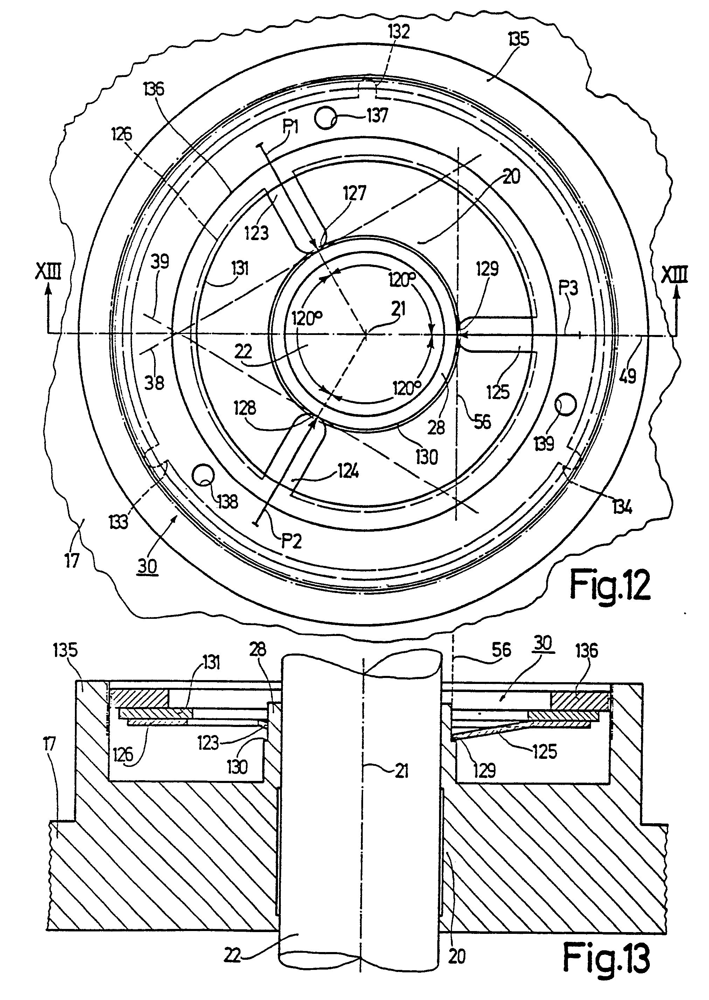

Bei dem in den Fig. 12 und 13 dargestellten Ausführungsbeispiel handelt es sich um eine Klemmeinrichtung 30, bei der zur Bildung der kraftschlüssigen Verbindung der rotierend antreibbaren Trommelhälfte 17 mit der Welle 22 alle drei Klemmbacken mit ihren Klemmflächen im wesentlichen senkrecht zur Achse 21 der Welle 22 mit einer Einstellvorrichtung verstellt werden. Die erste Klemmbacke 123, die zweite Klemmbacke 124 und die dritte Klemmbacke 125 dieser Klemmeinrichtung 30 sind durch je einen gegenüber der Welle 22 geneigt verlaufenden, von einem zur Achse der Welle 22 koaxialen Ring 126 radial zur Welle hin auskragenden Lappen gebildet. Auf diese Weise stehen die drei durch die Lappen gebildeten Klemmbacken 123, 124 und 125 über den Ring 126 in kraftschlüssiger Verbindung. Die drei Lappen sind dabei in Umfangsrichtung der Welle in einem gegenseitigen Winkelabstand von je 120° angeordnet und gegenüber dem Ring 126 in Richtung zur Trommelhälfte 17 hin abgewinkelt. Die freien Enden 127, 128 und 129 der Lappen 123, 124 und 125, die halbkreisförmig abgerundet sind, bilden dabei die Klemmflächen der Klemmbacken, die je in einer Tangentialebene 38, 39 bzw. 56 des hülsenförmigen Ansatzes 28 an demselben anliegen. Dabei weist der hülsenförmige Ansatz 28 eine Stufe 130 auf, an dem sich die vom Ring 126 zur Trommelhälfte 17 hin abgewinkelte Lappen mit ihren freien Enden abstützen. Hierdurch ist erreicht, dass die drei Klemmbacken in einem gleichen senkrecht zur Achse der Welle verlaufenden Niveau an dem hülsenförmigen Ansatz angreifen.

Auf den Ring 126 ist ein Druckring 131 aufgesetzt, der mit Hilfe von drei radial nach aussen vorspringenden Positionierungslappen 132, 133 und 134, die mit einem zur Achse 21 der Welle 22 koaxialen hohlzylindrischen Ansatz 135 an der rotierend antreibbaren Trommelhälfte 17 zusammenwirken, koaxial zur Achse der Welle und damit koaxial zum Ring 126 gehalten ist. Mit dem Druckring 131 wirkt ein als Einstellvorrichtung vorgesehener Schraubring 136 zusammen, der mit einem an seiner Stirnseite vorgesehenen Gewinde mit einem am Ansatz 135 der Trommelhälfte 17 vorgesehenen Gegengewinde zusammenwirkt und auf diese Weise in Richtung der Achse 21 der Welle 22 durch Verschrauben verstellbar ist. Der Schraubring 136 weist drei Bohrungen 137, 138 und 139 auf, in die zur Betätigung des Schraubringes ein geeignet ausgebildetes Werkzeug einführbar ist.

Zur Bildung der kraftschlüssigen Verbindung der rotierend antreibbaren Trommelhälfte 17 mit der Welle 22 wird nach dem Aufsetzen des Ringes 126 auf den hülsenförmigen Ansatz 28 und dem Anbringen des Druckringes 131 der als Einstellvorrichtung vorgesehene Schraubring 136 in Richtung zur Trommelhälfte 17 hin gegenüber dem Ansatz 135 desselben verschraubt. Diese Verstellbewegung des Schraubringes 136 wird mit Hilfe des Druckringes 131 gleichmässig auf den Ring 126 übertragen, wodurch der Ring 126 in Richtung der Achse 21 der Welle 22 zur Trommelhälfte 17 hin verschoben wird. Dabei werden die auf der Stufe 130 zunächst lose aufliegenden freien Enden 127, 128 und 129 der Lappen 123, 124 und 125 im wesentlichen senkrecht zur Achse der Welle verschoben, bis sich die Lappen an dem hülsenförmigen Ansatz verspreizen und denselben an der Welle klemmend festhalten.

Somit ist eine einfache Klemmeinrichtung erhalten, die in einfacher Weise eine gleichmässige Klemmwirkung ergibt. Da die Klemmeinrichtung nur an drei Klemmbereichen am hülsenförmigen Ansatz angreift, ist nur eine kleine Betätigungskraft erforderlich. Diese Betätigungskraft kann hierbei durch geeignete Wahl des Winkels, den die Lappe gegenüber der Welle einschliessen, besonders klein gehalten werden ; wenn nämlich die Lappen nur wenig gegenüber dem dieselben tragenden Ring abgewinkelt werden, beispielsweise um 3 bis 5°, dann wird ein sehr grosses Kräfteübersetzungsverhältnis zwischen der von dem Schraubring aufzubringenden Betätigungskraft und den Klemmkräften erreicht. Zweckmässigerweise kann der Ring und die Lappen aus einem federnden Material bestehen, da dann beim Lösen der Klemmeinrichtung durch entsprechendes Verschrauben des Schraubringes die Lappen selbsttätig vom hülsenförmigen Ansatz abheben und keine Klemmwirkung mehr ausüben. Auch ist noch zu erwähnen, dass es nicht unbedingt notwendig ist, den hülsenförmigen Ansatz bei der Verwendung einer wie vorstehend beschriebenen Klemmeinrichtung mit einer Stufe zu versehen, an der sich die freien Enden der Lappen abstützen. Es kann auch ein glatter hülsenförmiger Ansatz verwendet werden, wobei dann während des Festklemmens die Lappen beispielsweise durch ein zusätzliches Werkzeug in einem bestimmten senkrecht zur Achse der Welle verlaufenden Niveau gehalten werden, auf dem dieselben nach erfolgtem Festklemmen auf Grund der Reibung zwischen den Klemmflächen und dem hülsenförmigen Ansatz selbsttätig gehalten bleiben. Als Einstellvorrichtung können Anstelle des Schraubringes beispielsweise auch drei Stellschrauben vorgesehen sein, die den Ring, der die Lappen trägt, im Bereich der Lappen durchsetzen und in die rotierend antreibbare Trommelhälfte einschraubbar sind.

Wie aus der Zeichnung ersichtlich sind eine Reihe von Ausführungsformen von Klemmeinrichtungen möglich, die alle im Rahmen der Erfindung liegen. Auch weitere Ausgestaltungen sind möglich, dies beispielsweise im Hinblick auf die dritte Klemmbacke, die auch als ein senkrecht zur Achse der Welle verstellbarer, auf dem dritten Verbindungsbalken verschiebbar geführter Schieber ausgebildet sein kann, dessen Verschiebung durch Betätigung einer mit demselben zusammenwirkenden Stellschraube erfolgt. Die Klemmbacken und Verbindungsbalken brauchen auch nicht plattenförmig ausgebildet sein, sie können auch eine blockförmige oder klotzförmige Ausbildung aufweisen. Ferner können bei Anwendung von zwei Klemmeinrichtungen zum Befestigen einer rotierend antreibbaren Trommelhälfte an einer Welle auch zwei separate beispielsweise als Stellschraube ausgebildete Einstellvorrichtungen für jede Klemmeinrichtung verwendet werden. Der Träger für die Magnetköpfe muss nicht als Trommelhälfte ausgebildet sein, die zugleich zur Führung des Bandes dient ; erfindungsgemässe Klemmeinrichtungen eignen sich ebenso für einen scheibenförmigen Träger für Magnetköpfe, der zwischen zwei stillstehenden Trommelhälften zur Bandführung angeordnet ist, wobei die Magnetköpfe durch einen zwischen den beiden stillstehenden Trommelhälften vorgesehenen Spalt hindurch mit dem Band in Wirkverbindung treten können. Der Träger muss auch nicht rotationssymmetrisch, sondern kann beispielsweise auch im wesentlichen armförmig ausgebildet sein. Die Magnetköpfe je nach Art und Weise, wie das Band um die Bandführungstrommel geführt ist, nicht nur schräg zur Längsrichtung des Bandes verlaufende Informationsspuren abtasten, sondern auch solche, die im wesentlichen quer zur Längsrichtung des Bandes oder in der Längsrichtung desselben ausgerichtet sind.

Obenstehend ist erwähnt, dass die Zeichnungen Ausführungsbeispiele der Erfindung illustrieren und, zur Vermeidung jedes Missverständnisses, ist dabei weiterhin erwähnt, dass in denjenigen Fällen, wo in einem Anspruch genannte technische Merkmale mit sich darauf beziehenden eingeklammerten Bezugszeichen versehen sind, diese Bezugszeichen ausschliesslich zur Erleichterung des Verständnisses des Anspruchs aufgenommen sind.

## Patentansprüche

1. Aufzeichnungs- und/oder Wiedergabegerät für einen magnetisierbaren, bandförmigen Aufzeichnungsträger, das mindestens einen rotierend antreibbaren, den Aufzeichnungsträger entlang Informationsspuren abtastenden Magnetkopf (18, 19) aufweist, der auf einem Träger (17) angebracht ist, der eine Nabe (20) aufweist, mit welcher der Träger mit einer rotierend antreibbaren Welle (21) kraftschlüssig verbunden ist, wobei die Nabe mindestens einen seitlich auskragenden, hohlzylindrischen, koaxial zur Welle verlaufenden, hülsenförmigen Ansatz (28, 29) aufweist, an dem eine auf denselben aufgesetzte lösbare Klemmeinrichtung (30, 31) angreift, die zur kraftschlüssigen Verbindung des Trägers mit der Welle den hülsenförmigen Ansatz des Trägers an der Welle klemmend festhält, dadurch gekennzeichnet, dass die Klemmeinrichtung (30, 31) eine erste Klemmbacke (33, 33′) eine zweite Klemmbacke (34, 34') und eine dritte Klemmbacke (35, 35') aufweist, die untereinander kraftschlüssig in Verbindung stehen und die je eine an dem hülsenförmigen Ansatz in einer Tangentialebene (38, 39, 56 ; 38', 39', 56') desselben anliegende Klemmfläche (40, 41, 55 ; 40', 41', 55') aufweisen und die mit ihren Klemmflächen in Umfangsrichtung der Welle (22) in einem gegenseitigen Winkelabstand von je 120° und im wesentlichen in einem gleichen senkrecht zur Achse (21) der Welle verlaufenden Niveau (36 ; 36') an dem hülsenförmigen Ansatz (28, 29) angreifen, und dass zur Bildung der kraftschlüssigen Verbindung des Trägers (17) mit der Welle (22) mindestens eine der drei Klemmbacken mit ihrer Klemmfläche (55 ; 55') im wesentlichen senkrecht zur Achse (21) der Welle (22) mit einer Einstellvorrichtung (58, 63) verstellbar ist, wobei beim Verstellen dieser Klemmbacke zum Festklemmen des hülsenförmigen Ansatzes (28, 29) an der Welle (22) jede der drei Klemmbacken eine senkrecht zu der Tangentialebene, in der jeweils die Klemmfläche der Klemmbacke an dem hülsenförmigen Ansatz anliegt, verlaufende Klemmkraft (P1 bis P3 ; $P_1'$ bis $P_3'$) auf den hülsenförmigen Ansatz ausübt.

2. Gerät nach Anspruch 1, dadurch gekennzeichnet, dass die erste Klemmbacke und die zweite Klemmbacke über ein erstes Gelenk (37 ; 37') miteinander verbunden sind, dass die Klemmeinrichtung (30, 31) einen ersten Verbindungsbalken (42, 42'), der über ein zweites Gelenk (44, 44') mit der ersten Klemmbacke (33 ; 33') verbunden ist, und einen zweiten Verbindungsbalken (43 ; 43') aufweist, der über ein drittes Gelenk (45 ; 45') mit der zweiten Klemmbacke (34 ; 34') verbunden ist, wobei der erste und der zweite Verbindungsbalken über mindestens ein weiteres Gelenk (47, 48 ; 47', 48') miteinander verbunden sind und wobei die Gelenkachsen aller Gelenke im wesentlichen parallel zur Achse (21) der Welle (22) verlaufen, die Gelenkachse des ersten Gelenks (37, 37') in der durch die Achse (21) der Welle (22) hindurchgehenden Symmetrieebene (49 ; 49') zu den beiden Tangentialebenen (38, 39 ; 38', 39') in denen die Klemmfläche (40, 41 ; 40', 41') der ersten und der zweiten Klemmbacke (33, 34 ; 33', 34') an dem hülsenförmigen Ansatz (28, 29) anliegen, liegt und die Gelenkachse des zweiten Gelenks (44, 44'), und die Gelenkachse des dritten Gelenks (45, 45') in Bezug auf die Symmetrieebene (49, 49') zu den beiden Tangentialebenen (38, 39' ; 38', 39') spiegelbildlich zueinander angeordnet sind und eine durch die Gelenkachsen (44, 44') des zweiten und des weiteren Gelenks (47 ; 47') am ersten Verbindungsbalken (42 ; 42') hindurchgehende erste Verbindungsebene (50 ; 50') und eine durch die Gelenkachsen hindurchgehende zweite Verbindungsebene (51) sich in der Symmetrieebene (49 ; 49') zu den beiden Tangentialebenen (38, 39 ; 38', 39') schneiden, und dass die dritte Klemmbacke (35, 35') sich an einem im Bereich des weiteren Gelenks vorgesehenen Gegenlager (46, 46') abstützt und zur Bildung der kraftschlüssigen Verbindung des Trägers (17) mit der Welle (22) mit ihrer Klemmfläche (55, 55') im wesentlichen senkrecht zur Achse (21) der Welle (22) mit der Einstellvorrichtung (58, 63) gegenüber dem Gegenlager (46 ; 46') verstellbar ist, wobei die von der ersten Klemmbacke ausgeübte Klemmkraft ($P_1$ ; $P_1'$) eine erste Kraftkomponente ($N_1$ ; $N_1'$), die senkrecht zur Symmetrieebene (49 ; 49') zu den beiden Tangentialebenen (38, 39 ; 38', 39') verlaufend durch die Gelenkachse des ersten Gelenks (37 ; 37') hindurchgeht, und eine zweite Kraftkomponente ($Z_1$ ; $Z_1'$) aufweist, die in der ersten Verbindungsebene (50 ; 50') liegt, und die von der zweiten Klemmbacke (34 ; 34') ausgeübte Klemmkraft ($P_2$ ; $P_2'$) eine erste Kraftkomponente ($N_2$ ; $N_2'$), die senkrecht zur Symmetrieebene (49 ; 49') zu den beiden Tangentialebenen (38, 39 ; 38', 39') verlaufend durch die Gelenkachse des ersten Gelenks (37 ; 37') hindurchgeht, und eine zweite Kraftkomponente ($Z_2$ ; $Z_2'$) aufweist, die in der zweiten Verbindungsebene (51 ; 51') liegt, und die von der dritten Klemmbacke (35 ; 35') ausgeübte Klemmkraft ($P_3$ ; $P_3'$) in der Symmetrieebene (49 ; 49') zu den beiden Tangentialebenen (38, 39 ; 38', 39') liegend durch die Gelenkachse des ersten Gelenks (37 ; 37') hindurchgeht.

3. Gerät nach Anspruch 2, dadurch gekennzeichnet, dass das Gegenlager für die dritte Klemmbacke (35 ; 35') durch einen dritten Verbindungsbalken (46, 46') gebildet ist, der zwischen den ersten und den zweiten Verbindungsbalken (42, 43 ; 42', 43') eingefügt ist und der mit dem ersten Verbindungsbalken (42 ; 42') über ein erstes weiteres Gelenk (47 ; 47') und mit dem zweiten Verbindungsbalken (43) über ein zweites weiteres Gelenk (48, 48') verbunden ist.

4. Gerät nach Anspruch 3, dadurch gekennzeichnet, dass die dritte Klemmbacke (35 ; 35') der Klemmeinrichtung durch einen federnden, längs einer senkrecht zur Symmetrieebene (49 ; 49') zu den beiden Tangentialebenen (38, 39 ; 38', 39') verlaufenden Biegekante im wesentlichen V-förmig abgebogenen Spreizwinkel gebildet ist, der einen ersten Spreizschenkel (53, 53') und einen zweiten Spreizschenkel (54 ; 54') aufweist, wobei das freie Ende des ersten Spreizschenkels (53 ; 53' ) die Klemmfläche (55 ; 55') der dritten Klemmbacke (35 ; 35') bildet und das freie Ende des zweiten Spreizschenkels (54 ; 54') sich an dem dritten Verbindungsbalken (46 ; 46') abstützt, und dass an dem Spreizwinkel im wesentlichen im Bereich der Biegekante desselben eine Stellschraube (58) angreift, durch deren Betätigung die beiden Spreizschenkel (53, 54 ; 53', 54') des Spreizwinkels zum Festklemmen des hülsenförmigen Ansatzes an der Welle auseinanderspreizbar sind (Fig. 1-4).

5. Gerät nach Anspruch 4, dadurch gekennzeichnet, dass der als dritte Klemmbacke (35 ; 35') vorgesehene Spreizwinkel durch mindestens zwei Lagen von aneinanderliegenden, V-förmig abgebogenen Blattfedern gebildet ist. (Fig. 4).

6. Gerät nach Anspruch 3, dadurch gekennzeichnet, dass die dritte Klemmbacke der Klemmeinrichtung durch einen L-förmig abgewinkelten Bügel (65 ; 65') gebildet ist, der um eine senkrecht zur Symmetrieebene (49, 49') zu den beiden Tangentialebenen (38, 39 ; 38', 39') verlaufende Schwenkachse gegenüber dem dritten Verbindungsbalken (46 ; 46') schwenkbar an demselben gelagert ist und der einen im wesentlichen parallel zur Achse (21) der Welle (22) verlaufenden ersten Schenkel (67 ; 67') und einen im wesentlichen senkrecht zur Achse der Welle verlaufenden zweiten Schenkel (68 ; 68') aufweist, wobei die Klemmfläche (69, 69') der dritten Klemmbacke an dem ersten Schenkel (67 ; 67') ausgebildet ist, und dass an dem zweiten Schenkel (68 ; 68') eine Stellschraube (58) und dass an dem zweiten Schenkel (68 ; 68') eine Stellschraube (58) angreift, durch deren Betätigung der Bügel (65, 65') gegenüber dem dritten Verbindungsbalken (46 ; 46') zum Festklemmen des hülsenförmigen Ansatzes an der Welle (22) verschwenkbar ist. (Fig. 5-6).

7. Gerät nach einem der Ansprüche 4, 5 oder 6, dadurch gekennzeichnet, dass die Nabe (20) des Trägers mit zwei entgegengesetzt seitlich auskragenden hohlzylindrischen, koaxial zur Welle (22) verlaufenden, hülsenförmigen Ansätzen (28, 29) versehen ist, an denen je eine Klemmeinrichtung (30, 31) angreift, wobei die beiden dritten Klemmbacken der beiden Klemmeinrichtung in Bezug auf eine senkrecht zur Achse (21) der Welle (22) verlaufende, zwischen den beiden Klemmeinrichtungen liegende weitere Symmetrieebene (32) spiegelbildlich zueinander angeordnet sind, und dass zur Verstellung der beiden dritten Klemmbacken die einzige parallel zur Achse der Welle angeordnete Stellschraube (58) vorgesehen ist, welche die beiden dritten Klemmbacken durchsetzt und gegeneinander verspannt.

8. Gerät nach einem oder mehreren der Ansprüchen 2 bis 7, dadurch gekennzeichnet, dass die erste Klemmbacke (33 ; 33') und die zweite Klemmbacke (34 ; 34') und die Verbindungsbalken (42, 43 ; 42', 43') der Klemmeinrichtung als einstückige Klemmplatte ausgebildet sind und dass die Gelenke (37, 44, 45, 47, 48 ; 37', 45', 47', 48') durch in der Klemmplatte (52 ; 52') vorgesehene, im wesentlichen senkrecht zur Achse (21) der Welle (22) elastisch deformierbare Schwachstellen gebildet sind.

9. Gerät nach Anspruch 1, dadurch gekennzeichnet, dass die erste Klemmbacke und die zweite Klemmbacke starr miteinander verbunden und durch die Schenkel eines im wesentlichen V-förmigen Klemmstückes (83 (Fig. 9, 10) ; 107 (Fig. 11)) gebildet sind, an dessen beiden Schenkeln je eine an dem hülsenförmigen Ansatz in einer Tangentialebene desselben anliegende Klemmfläche vorgesehen ist, und dass die dritte Klemmbacke im wesentlichen senkrecht zur Achse der Welle mit der Einstellvorrichtung verstellbar ist.

10. Gerät nach Anspruch 9, dadurch gekennzeichnet, dass die dritte Klemmbacke mit mindestens einem der beiden Schenkel des Klemmstückes in gelenkiger Verbindung steht. (Fig. 11)

11. Gerät nach Anspruch 10, dadurch gekennzeichnet, dass mit jedem der beiden Schenkel (84, 85) des Klemmstückes (30) über je ein Gelenk (88, 89) ein Verbindungsbalken (90, 91) verbunden ist, welche beiden Verbindungsbalken ihrerseits in gelenkiger Verbindung stehen und in Bezug auf die Symmetrieebene (49) zu den beiden Tangentialebenen spiegelbildlich zueinander angeordnet sind, und dass die dritte Klemmbacke (96) sich an einem mit den Verbindungsbalken (90, 91) in gelenkiger Verbindung stehenden, im wesentlichen symmetrisch zur Symmetrieebene (49) zu den beiden Tangentialebenen angeordneten Gegenlager abstützt und zur Bildung der kraftschlüssigen Verbindung des Trägers (30) mit der Welle (22) gegenüber diesem Gegenlager verstellbar ist. (Fig. 9)

12. Gerät nach Anspruch 10, dadurch gekennzeichnet, dass die dritte Klemmbacke im wesentlichen als Balken (112) ausgebildet ist und mit einem Balkenende (113) über ein Gelenk (115) unmittelbar mit einem Schenkel (108) des Klemmstückes und mit dem anderen Balkenende über eine als Einstellvorrichtung vorgesehene, im wesentlichen quer zur Achse der Welle angeordnete Stellschraube (117) mit dem anderen Schenkel (109) des Klemmstückes zur Bildung der kraftschlüssigen Verbindung des Trägers mit der Welle verstellbar verbunden ist. (Fig. 11)

13. Gerät nach Anspruch 1, dadurch gekennzeichnet, dass die erste Klemmbacke, die zweite Klemmbacke und die dritte Klemmbacke durch je einen gegenüber der Welle geneigt verlaufenden, von einem zur Achse der Welle koaxialen Ring (126) radial zur Welle hin auskragenden Lappen (123-125) gebildet sind, deren freie Enden (127-129) die Klemmflächen bilden, und dass mit der Einstellvorrichtung alle drei Klemmbacken mit ihrer Klemmfläche im wesentlichen senkrecht zur Achse (21) der Welle (22), durch Verschieben des Ringes in Richtung der Achse der Welle, verstellbar sind. (Fig. 12-13).

**Claims**

1. A recording and/or reproducing apparatus for use with a magnetizable record carrier in the form of a tape, which apparatus comprises at least one rotatable magnetic head (18, 19) which scans the record carrier along information tracks and which is mounted on a support (17) which has a hub (20) by means of which the support is force-coupled to a rotatable shaft (21), the hub comprising at least one axially projecting tubular portion (28, 29) which is coaxial with the shaft and on which is placed a releasable clamping device (30, 31) for engaging said portion and clamping it on the shaft so as to provide the force-coupling between the support and the shaft, characterized in that the clamping device (30, 31) comprises first (33, 33') second (34, 34') and third (35, 35') clamping jaws which are force-coupled to each other and which each have a clamping surface (40, 41, 55 ; 40', 41', 55') which engages the tubular portion in a plane (38, 39, 56 ; 38' 39' 56') tangential thereto, the clamping surfaces engaging the tubular portion (28, 29) at locations which are spaced circumferentially of the shaft (22) at an angular distance of 120° from each other substantially in one plane (36 ; 36') perpendicular to the shaft axis (21), and in that by means of an adjusting device, in order to obtain the force-coupling between the support (17) and the shaft (22), at least one of the three clamping jaws is adjustable to move its clamping surface (55 ; 55') in a direction substantially perpendicular to the axis (21) of the shaft (22) and, when said clamping jaw is adjusted in order to clamp the tubular portion (28, 29) onto the shaft (22), each of the three clamping jaws exerts a clamping force ($P_1$ to $P_3$ ; $P_1'$ to $P_3'$) on the tubular portion, which force is directed perpendicularly to the tangential plane in which the clamping surface of the respective clamping jaw engages the tubular portion.

2. An apparatus as claimed in Claim 1, characterized in that the first and second clamping jaws are interconnected by a first pivotal joint (37 ; 37') in that the clamping device (30, 31) comprises a first connecting bar (43, 42') which is connected to the first clamping jaw (33, 33') by a second pivotal joint (44, 44'), and a second connecting bar (43, 43') which is connected to the second clamping jaw (34, 34') by a third pivotal joint (45, 45'), the first and second connecting bars being interconnected by at least one further pivotal joint (47, 48 ; 47', 48') and the axes of all said joints extending substantially parallel to the axis (21) of the shaft (22), and the axis of the first joint (37, 37') being disposed in the plane of symmetry (49 ; 49') relative to the two tangential planes (38, 39 ; 38', 39') in which the clamping surfaces (40, 41 ; 40', 41') of the first and second clamping jaws (33, 34 ; 33', 34') engage the tubular portion (28, 29), which plane of symmetry contains the axis (21) of the shaft (22), and the axis of the second joint (44, 44') and the axis of the third joint (45, 45') being arranged mirror-symmetrically with respect to each other relative to the plane of symmetry (49, 49') related to the two tangential planes (38, 39 ; 38', 39'), and a first connecting plane (50 ; 50'), which contains the axes of the second joint (44, 44') and the at least one further joint (47 ; 47') connected to the first connecting bar (42 ; 42'), and a second connecting plane (51), which contains the axes of the joints intersecting each other in the plane of symmetry (49 ; 49') related to the two tangential planes (38, 39 ; 38', 39') and in that the third clamping jaw (35, 35') bears against an abutment (46, 46') provided in the vicinity of the at least one further joint and by means of the adjusting device (58, 63) is adjustable to move its clamping surface (55, 55') relative to the abutment (46 ; 46') in a direction which is substantially perpendicular to the axis (21) of the shaft (22) in order to obtain the force-coupling between the support (17) and the shaft (22), the clamping force ($P_1$ ; $P_1'$) exerted by the first clamping jaw comprising a first force component ($N_1$ ; $N_1'$) which acts perpendicularly to the plane of symmetry (49 ; 49') related to the two tangential planes (38, 39 ; 38', 39') through the axis of the first joint (37 ; 37') and a second force component ($Z_1$ ; $Z_1'$) which acts in the first connecting plane (50 ; 50'), the clamping force ($P_2$ ; $P_2'$) exerted by the second clamping jaw (34, 34') comprising a first force component ($N_2$ ; $N_2'$) which acts perpendicularly to the plane of symmetry (49 ; 49') related to the two tangential planes (38, 39 ; 38', 39') through the axis of the first joint (37 ; 37') and a second force component ($Z_2$ ; $Z_2'$) which acts in the second connecting plane (51 ; 51') and the clamping force ($P_3$ ; $P_3'$) exerted by the third clamping jaw (35 ; 35') acts in the plane of symmetry (49 ; 49') related to the two tangential planes (38, 39 ; 38', 39') through the axis of the first joint (37 ; 37').

3. An apparatus as claimed in Claim 2, characterized in that the abutment for the third clamping jaw (35, 35') is constituted by a third connecting bar (46, 46') which extends between the first connecting bar and the second connecting bar (42, 43 ; 42', 43') and which is connected to the first connecting bar (42 ; 42') via a first further pivotal joint (47 ; 47') and to the second connecting bar (43) via a second further pivotal joint (48, 48').

4. An apparatus as claimed in Claim 3, characterized in that the third clamping jaw (35 ; 35') of the clamping device is constituted by a resilient expander which is bent into a substantially V-shape along a line which extends perpendicularly to the plane of symmetry (49 ; 49') related to the two tangential planes (38, 39 ; 38', 39'), the expander comprising a first expander limb (53, 53') and a second expander limb (54, 54'), the free end of the first expander limb (53, 53') constituting the clamping surface (55 ; 55') of the third clamping jaw (35 ; 35') and the free end of the second expander limb (54, 54') bearing against the third connecting bar (46 ; 46'), and in that a set-screw (58) acts on the expander substantially at the junction of the two limbs of said expander, said limbs (53, 54 ; 53', 54') being expandable by the actuation of said set-screw in order to clamp the tubular portion onto the shaft (Figs. 1-4).

5. An apparatus as claimed in Claim 4, characterized in that the expander, which serves as the third clamping jaw (35 ; 35'), is constituted by a substantially V-shaped leaf spring comprising at least two laminations (Fig. 4).

6. An apparatus as claimed in Claim 3, characterized in that the third clamping jaw of the clamping device is constituted by an L-shaped bracket (65 ; 65'), which is supported on the third connecting bar (46 ; 46') so as to be pivotable relative to said bar about an axis perpendicular to the plane of symmetry (49, 49') related to the two tangential planes (38, 39 ; 38', 39') and which comprises a first limb (67 ; 67') which extends substantially parallel to the axis (21) of the shaft (22) and a second limb (68 ; 68') which extends substantially perpendicularly to the shaft axis, the clamping surface (69 ; 69') or the third clamping jaw being formed on the first limb (67 ; 67'), and in that a set-screw (58) acts on the second limb (68, 68'), the bracket (65, 65') being pivotable relative to the third connecting bar (46 ; 46') by the actuation of said set-screw in order to clamp the tubular portion onto the shaft (22). (Figs. 5-6)

7. An apparatus as claimed in any one of Claims 4, 5 or 6, characterized in that the hub (20) of the support is provided with two tubular portions (28, 29) which project axially in opposite directions from the hub and which are coaxial with the shaft (22) and each of which is engaged by a clamping device (30, 31), the third clamping jaws of the two clamping devices being arranged mirror-symmetrically with respect to each other relative to a further plane of symmetry (32) which extends perpendicularly to the shaft axis (21) and which is situated between the two clamping devices, and in that for adjusting the two third clamping jaws there is provided a single set-screw (58) which extends parallel to the shaft axis through the two third clamping jaws and which is actuable to tighten said third jaws relative to each other.

8. An apparatus as claimed in any one of the Claims 2 to 7, characterized in that the first clamping jaw (33 ; 33'), the second clamping jaw (34 ; 34') and the connecting bars (42, 43 ; 42', 43') of the clamping device are formed as an integral clamping plate and in that the pivotal joints (37, 44, 45, 47, 48 ; 37', 44', 45', 47', 48') are constituted by hinges formed integrally with the clamping plate, which hinges are elastically deformable in a plane substantially perpendicular to the axis (21) of the shaft (22).

9. An apparatus as claimed in Claim 1, characterized in that the first clamping jaw and the second clamping jaw are rigidly connected to each other and are constituted by the limbs of a substantially V-shaped clamping member (83 (Figs. 9, 10) ; 107 (Fig. 11)), which limbs each comprise a clamping surface which engages the tubular portion in a plane tangential thereto, and the third clamping jaw is adjustable substantially perpendiculary to the shaft axis by means of the adjusting device.

10. An apparatus as claimed in Claim 9, characterized in that the third clamping jaw is pivotally connected to at least one of the two limbs of the clamping member. (Fig. 11).

11. An apparatus as claimed in Claim 10, characterized in that two connecting bars (90, 91) are connected one to each of the two limbs (84, 85) of the clamping member (30) via pivotal joints (88, 89), which two connecting bars are in turn pivotally connected to each other and are arranged mirror-symmetrically with respect to each other relative to the plane of symmetry (49) related to the two tangential planes and in that the third clamping jaw (96) bears against an abutment which is pivotally connected to the connecting bars (90, 91) and which is disposed substantially symmetrically relative to the plane of symmetry (49) related to the two tangential planes, and, in order to obtain the force-coupling between the support (30) and the shaft (22), the third clamping jaw is adjustable relative to said abutment. (Fig. 9).

12. An apparatus as claimed in Claim 10, characterized in that the third clamping jaw substantially takes the form of a bar (112) and at one end is connected directly to one limb (108) of the clamping member via a pivotal joint (115) and at the other end is connected to the other limb (109) of the clamping member via a set-screw (117) which functions as adjusting device and which extends substantially transversely of the shaft axis, in order to provide the force-coupling between the support and the shaft. (Fig. 11).

13. An apparatus as claimed in Claim 1, characterized in that the first clamping jaw, the second clamping jaw and the third clamping jaw, are each constituted by a tongue (123-125) which projects radially towards said shaft from a ring (126) which is coaxial with the shaft axis, the tongues being inclined relative to the shaft and the free ends (127-129) of said tongues constituting the clamping surfaces and in that by means of the adjusting device, all the three clamping jaws are adjustable to move their clamping surfaces in directions substantially perpendicular to the axis (21) of the shaft (22), by moving the ring in the direction of the shaft axis. (Figs. 12-13).

**Revendications**

1. Appareil d'enregistrement et/ou de reproduction pour un support d'enregistrement en forme de bande magnétisable comportant au moins une tête magnétique (18, 19) pouvant être entraînée en rotation qui analyse des pistes d'informations le long du support d'enregistrement et qui est montée sur un support (19) présentant un moyeu (20) par lequel il est relié par friction à un arbre (21) pouvant être entraîné en rotation, étant entendu que le moyeu présente au moins une saillie tubulaire (28, 29) coaxiale à l'arbre, en forme de cylindre creux, qui s'étend latéralement et sur laquelle agit un dispositif de serrage desserrable (30, 31) qui est monté sur le moyeu et qui, pour relier le support à l'arbre par friction, bloque par serrage la saillie tubulaire du support sur l'arbre, caractérisé en ce que le dispositif de serrage (30, 31) comporte une première mâchoire de serrage (33, 33'), une deuxième mâchoire de serrage (34, 34') et une troisième mâchoire de serrage (35, 35') qui sont reliées entre elles par des liaisons à transmission de force et qui présentent chacune une surface de serrage (40, 41, 55 ; 40', 41', 55') appliquée, dans un plan tangentiel (38, 39, 56 ; 38', 39', 56'), contre la saillie tubulaire, les surfaces de serrage attaquant la saillie tubulaire (28, 29) dans le sens circonférentiel de l'arbre (22) à des distances angulaires réciproques de 120° et essentiellement à un même niveau (36, 36') perpendiculaire à l'axe (21) de l'arbre et que, pour former la liaison par friction du support (17) à l'arbre (22), au moins une des trois mâchoires de serrage peut être déplacée au moyen d'un dispositif de réglage (58, 63) par sa surface de serrage (55 ; 55') essentiellement perpendiculairement à l'axe (21) de l'arbre (22) de sorte que, lorsque cette mâchoire de serrage est déplacée pour bloquer la saillie tubulaire (28, 29) sur l'arbre (22), chacune des trois mâchoires exerce sur la saillie tubulaire, une force de serrage ($P_1$ à $P_3$ ; $P_1'$ à $P_3'$) dirigée perpendiculairement au plan tangentiel dans lequel la surface de serrage de chaque mâchoire est appliquée contre la saillie tubulaire.

2. Appareil suivant la revendication 1, caractérisé en ce que la première mâchoire de serrage et la deuxième mâchoire de serrage sont reliées l'une à l'autre par une première articulation (37 ; 37'), que le dispositif de serrage (30, 31) comporte une première barrette de liaison (42, 42') qui est reliée par une deuxième articulation (44, 44') à la première mâchoire de serrage (33, 33') et une deuxième barrette de liaison (43, 43') qui est reliée par une troisième articulation (45, 45') à la deuxième mâchoire de serrage (34 ; 34'), étant entendu que la première et la deuxième barrette de liaison sont reliées l'une à l'autre par au moins une autre articulation (47, 48 ; 47', 48') et que les axes de toutes les articulations sont en substance parallèles à l'axe (21) de l'arbre (22), l'axe de la première articulation (37, 37') se situe dans le plan de symétrie (49 ; 49') passant par l'axe (21) de l'arbre (22) des deux plans tangentiels (38, 39 ; 38', 39') dans lesquels les surfaces de serrage (40, 41 ; 40', 41') de la première et de la deuxième mâchoire de serrage (33, 34 ; 33', 34') sont appliquées contre la saillie tubulaire (28, 29), l'axe de la deuxième articulation (44, 44') ainsi que celui de la troisième articulation (45, 45') sont disposés de manière énantiomorphe par rapport au plan de symétrie (49, 49') des deux plans tangentiels (38, 39 ; 38', 39'), un premier plan de liaison (50 ; 50') passant par les axes (44, 44') de la deuxième et de l'autre articulation (47 ; 47') sur la première barrette de liaison (42 ; 42') ainsi qu'un deuxième plan de liaison (51) passant par les axes articulations se recoupent dans le plan de symétrie (49 ; 49') des deux plans tangentiels (38, 39 ; 38', 39'), la troisième mâchoire de serrage (35, 35') prend appui sur une butée (46, 46') prévue dans le domaine de l'autre articulation et, pour former la liaison par friction du support (17) avec l'arbre (22), cette mâchoire peut être déplacée par sa surface de serrage (55, 55') par rapport à la butée (46 ; 46') en substance perpendiculairement à l'axe (21) de l'arbre (22) au moyen du dispositif de réglage (58, 63), de sorte que la force de serrage ($P_1$ ; $P_1'$) exercée par la première mâchoire de serrage présente une première composante de force ($N_1$ ; $N_1'$) qui, en s'étendant perpendiculairement au plan de symétrie (49 ; 49') des deux plans tangentiels (38, 39 ; 38', 39'), passe par l'axe de la première articulation (37, 37') et une deuxième composante de force (2 ; 2') qui se trouve dans le premier plan de liaison (50 ; 50'), et la force de serrage ($P_2$ ; $P_2'$) exercée par la deuxième mâchoire de serrage (34, 34') présente une première composante de force ($N_2$ ; $N_2'$) qui, s'étendant perpendiculairement au plan de symétrie (49 ; 49') des deux plans tangentiels (38, 39 ; 38' ; 39'), passe par l'axe de la première articulation (37 ; 37') et une deuxième composante de force ($Z_2$ ; $Z_2'$) qui se trouve dans le deuxième plan de liaison (55 ; 55') et la force de serrage ($P_3$ ; $P_3'$) exercée par la troisième mâchoire de serrage (35 ; 35') dans le plan de symétrie (49 ; 49') des deux plans tangentiels (38, 39 ; 38', 39') passe par l'axe de la première articulation (37 ; 37').

3. Appareil suivant la revendication 2, caractérisé en ce que la butée pour la troisième mâchoire de serrage (35 ; 35') est formée par une troisième barrette de liaison (46, 46') qui est insérée entre la première barrette de liaison (42, 42') et la deuxième (43, 43') et qui est reliée à la première barrette de liaison (42 ; 42') par l'intermédiaire d'une première autre articulation (47 ; 47') et à la deuxième barrette de liaison (43) par l'intermédiaire d'une deuxième autre articulation (48, 48').

4. Appareil suivant la revendication 3, caractérisé en ce que la troisième mâchoire de serrage (35 ; 35') du dispositif de serrage est formée par une équerre d'écartement à ressort coudée en substance en V suivant un pli s'étendant perpendiculairement au plan de symétrie (49 ; 49') des deux plans tangentiels (38, 39 ; 38', 39'), cette équerre comportant une première branche d'écartement (53, 53') et une deuxième branche d'écartement (54 ; 54'), l'extrémité libre de la première branche d'écartement (53 ; 53') formant la surface de serrage (55 ; 55') de la troisième mâchoire de serrage (35 ; 35') et l'extrémité libre de la deuxième branche d'écartement (54 ; 54') prenant appui sur la troisième barrette de liaison (46 ; 46') et qu'une vis de réglage (58) attaque l'équerre d'écartement en substance dans la zone de son pli, l'actionnement de cette vis permettant aux deux branches de l'équerre d'écartement (53, 54 ; 53', 54') de s'écarter l'une de l'autre pour bloquer la saillie tubulaire sur l'arbre (Fig. 1-4).

5. Appareil suivant la revendication 4, caractérisé en ce que l'équerre d'écartement prévue à titre de troisième mâchoire de serrage (35 ; 35') est formée par au moins deux épaisseurs de lames de ressort coudées en V et superposées (Fig. 4).

6. Appareil suivant la revendication 3, caractérisé en ce que la troisième mâchoire de serrage du dispositif de serrage est formée par une bride coudée en L (65 ; 65') qui est montée sur un axe de pivotement s'étendant perpendiculairement au plan de symétrie (49, 49') des deux plans tangentiels (38, 39 ; 38', 39') de manière à pivoter par rapport à la troisième barrette de liaison (46 ; 46') et sur celle-ci et qui présente une première branche (67 ; 67') s'étendant en substance parallèlement à l'axe (21) de l'arbre (22), la surface de serrage (69, 69') de la troisième mâchoire de serrage étant formée sur la première branche (67 ; 67') et qu'une vis de réglage (58) attaque la deuxième branche (68 ; 68'), la manipulation de cette vis pouvant faire pivoter la bride (65, 65') par rapport à la troisième barrette de liaison (46 ; 46') pour bloquer la saillie tubulaire sur l'arbre (22) (fig. 5-6).

7. Appareil suivant l'une quelconque des revendications 4, 5 ou 6, caractérisé en ce que le moyeu (20) du support est pourvu de deux saillies tubulaires opposées latérales (28, 29) en forme de cylindre creux, coaxiale à l'arbre, attaquées chacune par un dispositif de serrage (22), les deux troisièmes mâchoires de serrage des deux dispositifs de serrage étant disposées de manière énantiomorphe par rapport à un autre plan de symétrie (32) s'étendant perpendiculairement à l'axe (21) de l'arbre (22) et disposé entre les deux dispositifs de serrage et que, pour déplacer les deux troisièmes mâchoires de serrage, une seule vis de réglage (58) parallèle à l'axe de l'arbre est prévue, cette vis traversant les deux troisièmes mâchoires de serrage et les sollicitant l'une vers l'autre.

8. Appareil suivant l'une quelconque des revendications 2 à 7, caractérisé en ce que la première mâchoire de serrage (33 ; 33') et la deuxième mâchoire de serrage (34 ; 34') ainsi que les barrettes de liaison (42, 43 ; 42', 43') du dispositif de serrage ont la forme d'une plaque de serrage d'une pièce et que les articulations (37, 44, 45, 47, 48 ; 37', 44', 45', 47', 48') sont formées par des endroits affaiblis prévus dans la plaque de serrage et élastiquement déformables en substance perpendiculairement à l'axe (21) de l'arbre (22).

9. Appareil suivant la revendicatton 1, caractérisé en ce que la première mâchoire de serrage et la deuxième mâchoire de serrage sont reliées rigidement l'une à l'autre et sont formées par les branches d'un élément de serrage en substance en forme de V (83 (fig. 9, 10) ; 107 (fig. 11)) dont les deux branches présentent chacune une surface de serrage appliquée contre la saillie tubulaire dans un plan tangentiel à celle-ci et que la troisième mâchoire peut être déplacée au moyen du dispositif de réglage en substance perpendiculairement à l'axe de l'arbre.

10. Appareil suivant la revendication 9, caractérisé en ce que la troisième mâchoire de serrage est reliée de manière articulée au moins à une des deux branches de l'élément de serrage (fig. 11).

11. Appareil suivant la revendication 10, caractérisé en ce qu'une barrette de liaison (90, 91) est reliée à chacune des deux branches (84, 85) de l'élément de serrage (30) chaque fois par l'intermédiaire d'une articulation (88, 89), les deux barrettes de liaison étant, pour leur part, articulées l'une à l'autre et étant disposées de manière énantiomorphe l'une à l'autre par rapport au plan de symétrie (49) des deux plans tangentiels et que la troisième mâchoire de serrage (96) prend appui sur une butée d'appui articulée à la barrette de liaison (90, 91) et disposée en substance symétriquement au plan de symétrie (49) des deux plans tangentiels et pouvant être déplacée par rapport à cette butée pour former la liaison par friction du support (30) à l'arbre (22) (fig. 9).

12. Appareil suivant la revendication 10, caractérisé en ce que la troisième mâchoire de serrage a essentiellement la forme d'une barrette (112) et est reliée par une extrémité (113), par l'intermédiaire d'une articulation (115), directement à une branche (108) de l'élément de serrage et, par l'autre extrémité, de manière déplaçable, par l'intermédiaire d'une vis de réglage (117) prévue à titre de dispositif de réglage et disposée en substance orthogonalement à l'axe de l'arbre, à l'autre branche (109) de l'élément de serrage pour former la liaison par friction de support à l'arbre (fig. 11).

13. Appareil suivant la revendication 1, caractérisé en ce que la première mâchoire de serrage, la deuxième mâchoire de serrage et la troisième mâchoire de serrage sont formées chacune par une languette (123, 125) inclinée par rapport à l'arbre et faisant saillie radialement vers l'arbre à partir d'un anneau (126) coaxial à l'axe de l'arbre, les extrémités libres (127-129) de ces languettes formant les surfaces de serrage et que les trois mâchoires de serrage avec leurs surfaces de serrage peuvent être déplacées au moyen du dispositif de réglage en substance perpendiculairement à l'axe (21) de l'arbre (22) par un déplacement de l'anneau dans le sens de l'axe de l'arbre (fig. 12-15).

Fig.1

Fig.2

Fig.3

Fig.4

0 034 381

Fig.5

Fig.6

3

Fig.7

Fig.8

Fig.9

Fig.10

Fig.11

Fig.12

Fig.13